# EUROPÄISCHE PATENTANMELDUNG

(11) **EP 4 699 452 A2**
(43) Veröffentlichungstag der Anmeldung: **25.02.2026**
(21) Anmeldenummer: 25210986.3
(22) Anmeldetag: 17.08.2018
(51) Int. Cl.: A23L 2/64, A23L 2/80, A23L 27/10, A23L 2/385, A23F 5/50, C12G 3/06, C12G 3/08, C12H 1/00, C12H 1/056, C12C 5/02, C12C 5/00, C12C 12/04

(54) **GEWINNUNG EINER FLÜCHTIGEN FRAKTION AUS SÄFTEN ODER ALKOHOLISCHEN GETRÄNKEN**

(62) Teilanmeldung aus: 18755820.0
(71) Anmelder: Symrise AG, 37603 Holzminden Niedersachsen (DE)
(72) Erfinder: Kiefl, Johannes, 37603 Holzminden (DE); Winkler, Dominik, 37603 Holzminden (DE); Brennecke, Stefan, 37603 Holzminden (DE); Hilmer, Jens Michael, 37603 Holzminden (DE); Kindel, Alexander, 37603 Holzminden (DE)
(74) Vertreter: Eisenführ Speiser

(57) **Zusammenfassung**

Die vorliegende Erfindung betrifft primär ein Verfahren zur Gewinnung einer flüchtigen Fraktion aus einem Saft und/oder einem Alkohol enthaltenden Getränk und/oder einem Püree, wobei der Saft bzw. das Alkohol enthaltenden Getränk bzw. das Püree Ethanol enthält, aufweisend oder bestehend aus folgenden Schritten: (a) Destillation eines Stoffgemischs aus dem Saft und/oder dem Alkohol enthaltenden Getränk und/oder dem Püree, wobei die Destillation durch eine Schleuderkegelkolonne erfolgt; (b) in Kontakt Bringen des Stoffgemischs aus Schritt (a) mit einem Sorbens zum Erhalten eines beladenen Sorbens; und (c) in Kontakt Bringen des beladenen Sorbens aus Schritt (b) mit einem liquiden Desorbens zum Erhalten der flüchtigen Fraktion, wobei gewünschte Inhaltsstoffe der flüchtigen Fraktion derart aufkonzentriert im Vergleich zu dem Saft und/oder dem Alkohol enthaltenden Getränk und/oder dem Püree sind, dass das Verhältnis des in der flüchtigen Fraktion enthaltenen Ethanols zu der Summe an Aromastoffen V(E/A) 0,005 bis 1000, vorzugsweise 0,1 bis 20 beträgt, und, dass ein Zusatz von 0,1 Massen-% oder weniger der flüchtigen Fraktion zu einer beliebigen Lebensmittelzubereitung einen wahrnehmbaren Geruchseindruck und/oder Geschmackseindruck bei einer Testperson erzeugt.

## Beschreibung

Die vorliegende Erfindung betrifft ein Verfahren zur Gewinnung einer flüchtigen Fraktion aus einem Saft und/oder einem Alkohol enthaltenden Getränk, ohne dass dabei wertvolle Inhaltsstoffe, v.a. in einer flüchtigen Fraktion bspw. enthaltene Aromen, teilweise oder vollständig verloren gehen bzw. abgebaut werden. Die flüchtige Fraktion kann in einem zum Verzehr geeigneten Produkt oder zu dessen Herstellung verwendet werden. Bspw. kann die flüchtige Fraktion einem Lebensmittelkonzentrat zur Rekonstitution des ursprünglichen Aromas hinzugeben werden.

Bei der Lebensmittelverarbeitung, insbesondere der Getränke, sowie Gemüse- und Fruchtsaftherstellung, sowie bei der Extraktion von Lebensmitteln, entstehen industriell bedeutsame Mengen geruchs- und geschmacksintensiver wässriger Lösungen, die aufkonzentriert und als Konzentrat zugegeben das selbige Lebensmittel rearomatisieren oder andere Lebensmittel aromatisieren können.

Verfahren zur Aufkonzentrierung und Fraktionierung von Aromastoffen aus Lebensmitteln sind im Stand der Technik gut bekannt und umfassen bspw. Destillation, Membranverfahren, Ad-/Desorption, Extraktion mit überkritischem Kohlenstoffdioxid und Flüssig-Flüssig Extraktion. Beispielsweise wird bei der Gewinnung von Orangensaftkonzentrat ein aromatisches Brüdenkondensat gewonnen, welches nach Aufkonzentrierung dem Orangensaftkonzentrat zur Rekonstitution des Aromas zugegeben werden kann.

Durch das gestiegene Verbraucherinteresse nach authentischem Geschmackserlebnis und gesundheitsbewusster Ernährung, sind bestehende Verfahren zur Aufkonzentrierung wässriger Lösungen nur noch eingeschränkt nutzbar. So können bspw. durch Destillation, durch die thermische Belastung des wässrigen Produkts, Kochnoten entstehen, die nicht als authentisches Geschmackserlebnis angesehen werden. So bilden sich bei der Aufkonzentrierung von Erdbeer-Brüdenkondensaten Kochnoten, die den Verbraucher an Konfitüre und nicht an den Verzehr frischer Erdbeeren erinnern.

Darüber hinaus stellen die aromatischen, wässrigen Lösungen keinen chemisch einheitlichen Stoff dar, sondern setzen sich aus einer Vielzahl unterschiedlicher chemischer Komponenten zusammen, die erst in ihrer Gesamtheit das sensorische Ergebnis des natürlichen Aromas eines Lebensmittels ergeben. Bei der Handhabung von aromastoffhaltigen Medien, bzw. bei der Verarbeitung von Lebensmitteln besteht deshalb die Gefahr, dass Teile der natürlichen Mischung verlorengehen oder abgebaut werden und damit der natürliche Gehalt gemindert oder gar zerstört wird. Die im Stand der Technik bekannten Verfahren zur Aufkonzentrierung führen häufig zu einer unerwünschten Fraktionierung der Mischung aus den Aromastoffen. So zeigen destillative Verfahren erfahrungsgemäß eine geringe Wiederfindung von schwerflüchtigen Aromastoffen. Adsorptive Verfahren diskriminieren zwischen Aromastoffen unterschiedlicher Polarität, und Membranverfahren zeigen anerkanntermaßen eine Selektivität gegenüber der Zurückhaltung von Aromastoffen entsprechend der Membranbeschaffenheit.

Deshalb ist es wichtig, ein Verfahren zu entwickeln, welches wässrige Lösungen ausreichend stark aufkonzentriert, um bei einem Zusatz eines Konzentrats im Promillebereich zum Lebensmittel einen ausreichend wahrnehmbaren Geruchseindruck vermittelt zu bekommen und dabei wertgebende Aromastoffe in ihrer ursprünglichen Zusammensetzung zu behalten.

Erschwerend kommt hinzu, dass ein derartiges Verfahren in der Lage sein sollte, wertgebende Aromastoffe selektiv anzureichern und andere unerwünschte Inhaltstoffe, wie bspw. Alkohole und insbesondere Ethanol, abzureichern oder vollständig zu entfernen.

Da der Anteil muslimisch Gläubiger in der Weltbevölkerung steigt, steigt die Nachfrage nach alkoholfreien Produkten, d.h. Produkten mit Restalkohol, insbesondere Ethanol, von < 0,1%. Da v.a. Fruchtwasserphasen in der Regel Ethanol enthalten, der im Konzentrat zweitstellige Prozentgehalte erreichen kann, muss dieser im Vergleich zu anderen Aromastoffen abgereichert werden. In einem bevorzugt anzuwendenden Verfahren kann daher Ethanol nicht als Hilfsmittel zur Anwendung gebracht werden.

Die Entalkoholisierung von Getränken spielt in diesem Zusammenhang ebenfalls eine wichtige Rolle, da sie beliebte Alkohol enthaltende Getränke, wie Wein, Sekt und Bier, einer breiteren Verbrauchergruppe zugänglich macht, die bspw. auf Grund einer gesundheitsbewussten Ernährung, rechtlicher Beschränkungen oder Krankheit Vorbehalte gegenüber dem Alkoholkonsum haben.

Üblicherweise werden bei der Entalkoholisierung flüchtige Stoffe abgetrennt und bspw. durch Rektifikation Fraktionen flüchtiger Stoffe gewonnen, die an Ethanol abgereichert sind und dem entalkoholisierten Getränk zurückgegeben werden. Entalkoholisierte Getränke erlangen dabei aber bis heute kein dem ursprünglichen Alkohol enthaltenden Getränk ähnliches Aromaprofil. Ein geeignetes Verfahren muss auch in diesem Fall flüchtige Stoffe in der wässrig-alkoholischen Lösung anreichern und Ethanol abreichern.

Im Bereich der Aromagewinnung verschiedener hitzeempfindlicher Lebensmittel wie Fruchtsäfte, sowie in der Wein- und Bierentalkoholisierung, wird bspw. seit längerer Zeit die Schleuderkegelkolonnen(Spinning Cone Column, SCC)-Destillation angewendet. Da es sich um ein destillatives Verfahren handelt, werden schwerflüchtigere Aromastoffe wie 2-Phenylethanol (mit einem rosigen Aroma und wichtig bspw. für Bier) bei Temperaturen <35°C nur geringfügig mitgeschleppt. Erhöht man die Temperatur bspw. auf 80°C um die Ausbeuten schwerflüchtiger Stoffe zu erhöhen, werden Gärhauptprodukte wie Ethanol und Fuselalkohole ebenfalls stark angereichert und dadurch die Konzentration der wertgebenden Aromastoffe verringert (Müller et al.," Physikalische Verfahren zur Entalkoholisierung verschiedener Getränkematrizes und deren Einfluss auf qualitätsrelevante Merkmale", Chemie Ingenieur Technik, Wiley Online Library, 20.10.2016, https://doi.org/10.1002/cite.201600071). Für die Herstellung alkoholfreier Getränke mit unter 0,05 Alk.-Vol.-%, was in Deutschland für eine Deklaration eines 0,0 Alk.-Vol.-%-Bieres notwendig ist, bedeutet dies eine Minderung der sensorischen Qualität, da der Ethanolgehalt die zurückgeführte Menge wertgebender Aromastoffe beschränkt.

Gärhauptprodukte wie Ethanol und Fuselalkohole können in Lebensmitteln auch ungewollt bei der Lagerung von bspw. Früchten entstehen. Bei der Gewinnung von Aromakonzentraten werden diese stark angereichert und beschränken somit die Anwendbarkeit der Aromakonzentrate. Um dieses Problem zu lösen, wird in der WO 2015/001943 A2 ein Verfahren zum Auftauen von gefrorenen Früchten und Extraktion des Pürees mit SCC-Destillation beschrieben. Da die Zeit zwischen Ernte und Verarbeitung von Früchten kritisch für die Bildung von Gärhauptprodukten wie Methanol ist, wurden Früchte direkt nach der Ernte schockgefrostet, um eine Lagerung ohne Qualitätsverlust zu ermöglichen. Durch diesen Prozess wird ein Destillat arm an Gärhauptprodukten und an wertgebenden Aromastoffen angereichert gewonnen. Allerdings ist das Gefrieren und Auftauen von Früchten ein aufwendiger, v.a. kostenintensiver, Prozess, der ebenfalls die Rearomatisierung aufwendig und kostenintensiv gestaltet. Es wird offenbart, dass es unmöglich sei, Methanol von Aromafraktionen ohne Verluste an wertgebenden Aromastoffen zu trennen.

Die WO 2015/104357 A1 beschreibt die Trennung in alkohol- und aromahaltiges Permeat und ein nahezu alkoholfreies Retentat (<1 Vol.-%) durch Nanofiltration mit einer Dow Filmtech N90 Membran. Das Permeat, welches zur Rearomatisierung verwendet werden soll, wird mittels fraktionierter Destillation oder Adsorption der Aromastoffe an Purolite Macronet 200 beschrieben. Zur Rekonstitution der in den Beispielen aufgeführten entalkoholisierten Weine werden aus Geschmacksgründen Aromafraktionen zugesetzt, die zu einem Alkoholgehalt von 4,3 und 4,8 Vol.-% im Endprodukt führten. Mithin weist das zur Rearomatisierung eingesetzte Permeat neben den wertgebenden Aromastoffen noch relevante Mengen Ethanol auf.

Die Trennung von mengenmäßig dominierenden Alkoholen von anderen wertgebenden Aromastoffen ist somit technologisch eine Herausforderung, und die Gewinnung von sensorisch dem Ausgangsmaterial entsprechenden entalkoholisierten Getränke ist bisher nicht umsetzbar.

Daher besteht eine Aufgabe der vorliegenden Erfindung in der Bereitstellung eines Verfahrens zur Gewinnung flüchtiger Fraktionen aus einem Saft und/oder einem Alkohol enthaltenden Getränk, bei dem die vorstehend genannten Schwierigkeiten vorzugsweise nicht auftreten. Eine weitere Aufgabe der vorliegenden Erfindung besteht in der Bereitstellung eines Verfahrens zur Gewinnung flüchtiger Fraktionen aus einem Saft und/oder einem Alkohol enthaltenden Getränk, durch dessen Einsatz geruchs- und geschmacksaktive wässrige wie wässrig-alkoholische Lösungen ohne Verluste an wertgebenden Stoffen und ohne Bildung von Störkomponenten ausreichend stark aufkonzentriert werden können, um dabei das sensorische Profil des Ausgangsmaterials zu behalten.

Die Erfindung betrifft daher ein Verfahren zur Gewinnung einer flüchtigen Fraktion aus einem Saft und/oder einem Alkohol enthaltenden Getränk. Das erfindungsgemäße Verfahren weist die folgenden Schritte auf oder besteht daraus:
(a) Destillation eines Stoffgemischs aus dem Saft und/oder dem Alkohol enthaltenden Getränk, wobei die Destillation durch eine Schleuderkegelkolonne erfolgt;
(b) in Kontakt Bringen des Stoffgemischs aus Schritt (a) mit einem Sorbens zum Erhalten eines beladenen Sorbens; und
(c) in Kontakt Bringen des beladenen Sorbens aus Schritt (b) mit einem liquiden Desorbens zum Erhalten der flüchtigen Fraktion, wobei gewünschte Inhaltsstoffe der flüchtigen Fraktion derart aufkonzentriert im Vergleich zu dem Saft und/oder dem Alkohol enthaltenden Getränk sind, dass ein Zusatz von 0,001 bis 0,1 Massen-% der flüchtigen Fraktion zu einer beliebigen Lebensmittelzubereitung, insbesondere dem Saft und/oder dem Alkohol enthaltenden Getränk, einen wahrnehmbaren Geruchseindruck und/oder Geschmackseindruck bei einer Testperson erzeugt.

Vorzugsweise kommt im Rahmen des erfindungsgemäßen Verfahrens lediglich eine einzelne Schleuderkegelkolonne zum Einsatz und/oder wird der Verfahrensschritt (a) lediglich ein einziges Mal oder zwei Mal durchlaufen. Alternativ oder zusätzlich, werden die Verfahrensschritte (b) und (c) ebenfalls lediglich einmal durchlaufen. Dies hat den Vorteil, dass im Vergleich zu Anlagen in denen bspw. eine Kombination aus zwei oder mehr Schleuderkegelkolonnen zur Verwendung gelangen bzw. ein oder mehrere Verfahrensschritte des erfindungsgemäßen Verfahrens mehr als einmal durchlaufen werden, Kosten eingespart werden können bzw. der Material- und Wartungsaufwand geringer ausfällt. Alternativ oder zusätzlich, können die Lebensmittel für die wässrige Lebensmittelfraktion unmittelbar verwendet werden und erfordern keine besonderen Lagerbedingungen. Bspw. können Früchte und/oder Beeren, die für die Herstellung eines Safts herangezogen werden, bei Umgebungstemperatur, bspw. 22 bis 32°C, gelagert werden, ohne dass die gewonnene flüchtige Fraktion im Vergleich zu einem frisch erhaltenen (gepressten) Fruchtsafts sensorisch beeinträchtigt ist.

Weiterhin betrifft die Erfindung eine flüchtige Fraktion, die durch das erfindungsgemäße Verfahren erhalten oder erhältlich ist.

Die Erfindung stellt auch die Verwendung der flüchtigen Fraktion in einem zum Verzehr geeigneten Produkt oder zur Herstellung eines zum Verzehr geeigneten Produkts bereit. Beispielhafte zum Verzehr geeignete Produkte umfassen Nahrungsmittel, Genussmittel, Getränke, Halbfertigwaren, Mundhygiene- sowie kosmetische oder pharmazeutische Produkte.

Die Erfindung stellt ebenso ein zum Verzehr geeignetes Produkt, vorzugsweise ausgewählt aus der Gruppe bestehend aus Nahrungsmittel, Genussmittel, Getränke, Halbfertigwaren, Mundhygiene- sowie kosmetische oder pharmazeutische Produkte, bereit. Das zum Verzehr geeignete Produkt weist eine Menge der erfindungsgemäßen flüchtigen Fraktion auf, wobei vorzugsweise der Gesamtanteil der flüchtigen Fraktion bezogen auf das Gesamtgewicht des zum Verzehr geeigneten Produkts im Bereich von 0,001 bis 5 Massen-%, bevorzugt im Bereich von 0,01 bis 1 Massen-%, besonders bevorzugt im Bereich von 0,1 bis 0,5 Massen-% liegt.

Überraschenderweise wurde im Rahmen der vorliegenden Erfindung gefunden, dass durch die Kombination einer Schleuderkegelkolonnen(Spinning Cone Column, SCC)-Destillation gefolgt von einem Sorptions-/Desorptionsverfahren, insbesondere einem Adsorptions-/Desorptionsverfahren, die vorstehend genannten Schwierigkeiten gelöst und die gewünschten Inhaltsstoffe der flüchtigen Fraktion derart aufkonzentriert im Vergleich zu dem Saft und/oder dem Alkohol enthaltenden Getränk erhalten werden, dass ein Zusatz von 0,001 bis 0,1 Massen-%, bspw. 0,0025 bis 0,075 Massen-%, 0,005 bis 0,05 Massen-%,0,0075 bis 0,025 Massen-%, oder 0,01 Massen-%, der flüchtigen Fraktion zu einer beliebigen Lebensmittelzubereitung einen wahrnehmbaren Geruchseindruck und/oder Geschmackseindruck bei einer Testperson erzeugt. Die Kombination einer Schleuderkegelkolonnen-Destillation mit einem Sorptions-/Desorptionsverfahren kann ferner die nahezu quantitative Entfernung von unerwünschten Inhaltsstoffen, insbesondere Alkoholen, einschließlich Fuselalkoholen und insbesondere Ethanol, bereitstellen. Mithin können durch die Kombination einer Schleuderkegelkolonnen-Destillation gefolgt von einem Sorptions-/Desorptionsverfahren, insbesondere Adsorptions-/Desorptionsverfahren, auch gelagerte Früchte/Beeren, gelagertes Gemüse bzw. die daraus erhaltenen Säfte mit einem höheren, durch Gärung hervorgerufenen Alkoholgehalt derart weiterverarbeitet werden, dass ein daraus erhaltenes zum Verzehr geeignetes Produkt als alkoholfrei deklariert werden kann.

Der Begriff "alkoholfrei" wie hierin verwendet betrifft zum Verzehr geeignete Produkte, insbesondere Lebensmittel und Getränke, die 0,5 Vol.-% oder weniger, vorzugsweise 0,1 Vol.-% oder weniger, 0,01 Vol.-% oder weniger, oder sogar 0,001 Vol.-% oder weniger, Alkohol enthalten.

Der Begriff "Saft" wie hierin verwendet betrifft vorzugsweise Obst- bzw. Gemüsesäfte, die aus Obst bzw. Gemüse unmittelbar nach Ernte, d.h. frisch, gepresst werden, und ggf. für einen Zeitraum von bspw. maximal 1 Monat, wie 21 Tage, 14 Tage, 7 Tage, 6 Tage, 5 Tage, 4 Tage, 3 Tage, 2 Tage, oder 1 Tag oder weniger nach der Ernte stehengelassen werden, oder in einem Zeitraum von vorzugsweise 6 Stunden bis 1 Monat, wie 21 Tage, 14 Tage, 7 Tage, 6 Tage, 5 Tage, 4 Tage, 3 Tage, 2 Tage, 1 Tag, oder 12 Stunden, nach der Ernte gepresst werden. Ein Saft kann mithin den Alkohol enthalten, der zwangläufig durch alkoholische Gärung erhalten wird. Ein "Saft" ist diesbezüglich vorzugsweise von einem "Alkohol enthaltenden Getränk" bzw. "alkoholischen Getränk" zu unterscheiden, bei dem der Alkoholgehalt im Rahmen der Herstellung (gewollt) erzeugt oder erhöht wird und bspw. einen Alkoholgehalt von 2 Vol.-% oder mehr, wie 5 Vol.-% oder mehr, 10 Vol.-% oder mehr, 15 Vol.-% oder mehr, 30 Vol.-% oder mehr, oder 40 Vol.-% oder mehr, aufweist. Der Alkoholgehalt des "Alkohol enthaltenden Getränks" übersteigt damit im Regelfall den Alkoholgehalt eines "Safts".

Der Begriff "flüchtige Fraktion" wie hierin verwendet betrifft ein Liquid, üblicherweise ein oder mehrere Lösungsmittel, wie bspw. eines oder mehrere ausgewählt unter Wasser, Alkohol, insbesondere Ethanol und Öl, das als erwünschte(n) Inhaltsstoff(e) einen oder mehrere "Aromastoffe" aufweist und mithin ein Aromakonzentrat darstellt. Der Begriff "Aromastoff" wie hierin verwendet ist breit zu verstehen und betrifft ein Aroma, einen Geschmacksstoff oder einen Duftstoff bzw. Kombinationen davon, der/die in Lebensmitteln, insbesondere dem Saft und/oder dem alkoholischen Getränk, enthalten sind. Neben dem/den erwünschten Inhaltsstoff(en) bzw. dem einen oder mehreren Aromastoffen liegen in der Regel weitere Inhaltsstoffe vor. Diese weiteren Inhaltsstoffe sind für gewöhnlich unerwünschte Inhaltsstoffe, wie im Rahmen des vorliegenden Textes beispielsweise Alkohole, insbesondere Fuselalkohole und/oder Ethanol. Ein Verhältnis der in der flüchtigen Fraktion enthaltenen unerwünschten Inhaltsstoffe, insbesondere eines Alkohols, zu der Summe an erwünschten Inhaltsstoffen bzw. Aromastoffen kann 0,005 bis 1000, vorzugsweise 0,1 bis 20 betragen. Ein Verhältnis des in der flüchtigen Fraktion enthaltenen Ethanols zu der Summe an Aromastoffen V(E/A) kann 0,005 bis 1000, vorzugsweise 0,1 bis 20, betragen. Die Menge an Liquid, vorzugsweise eines oder mehrerer Lösungsmittel, wie bspw. eines oder mehrere ausgewählt unter Wasser, Alkohol, insbesondere Ethanol und Öl, beträgt, bezogen auf das Gesamtvolumen der flüchtigen Fraktion, 30 bis 98 Vol.-%, vorzugsweise 30 bis 98 Vol.-%, 40 bis 97 Vol.-%, 50 bis 96 Vol.-%, 60 bis 95 Vol.-%, 65 bis 94 Vol.-%, 70 bis 93 Vol.-%, 75 bis 92 Vol.-%, 80 bis 91 Vol.-%, oder 85 bis 90 Vol.-%.

Die vorstehend genannten einen oder mehreren Aromastoffe können einerseits von Natur aus in vielen unbehandelten Lebensmitteln vorliegen und/oder erst nach mechanischer/thermischer/enzymatischer Behandlung von Lebensmitteln gebildet werden. So stellen bspw. die Maillard-Reaktion, bei der Aminverbindungen mit reduzierenden Verbindungen unter Hitzeeinwirkung zu neuen Verbindungen umgewandelt werden, oder die Karamellisierung bei der thermischen Behandlung von Lebensmitteln auftretende Reaktionen dar. Die "flüchtige Fraktion" stellt vorzugsweise das "Konzentrat" des Aromas, des Geschmacks- und/oder Duftstoffs bzw. der Kombinationen davon dar, d.h. gibt deren Zusammensetzung in einem Lebensmittel oder einer Lebensmittelzubereitung, insbesondere dem Saft und/oder dem Alkohol enthaltenden Getränk, derart wieder, dass das Lebensmittel oder die Lebensmittelzubereitung, insbesondere der Saft und/oder das Alkohol enthaltende Getränk, worin das Aroma, der Geschmacks- und/oder Duftstoff bzw. Kombinationen davon nicht enthalten sind und mit dem Konzentrat versetzt werden, den gleichen Geruchseindruck und/oder Geschmackseindruck wie das Lebensmittel oder die Lebensmittelzubereitung, insbesondere der ursprüngliche, frisch zubereitete Saft und/oder das ursprüngliche, frisch hergestellte Alkohol enthaltende Getränk, bei einer Testperson erzeugt.

Ein Zusatz von 0,001 bis 0,1 Massen-% dieser flüchtigen Fraktion zu einer beliebigen Lebensmittelzubereitung, erzeugt einen wahrnehmbaren Geruchseindruck und/oder Geschmackseindruck bei einer Testperson. Mithin wird ein wahrnehmbarer Geruchseindruck und/oder Geschmackseindruck nach dem Aromastoff, mithin dem Aroma, dem Geschmacks- und/oder Duftstoff bzw. einer Kombination davon, bei der Testperson erzeugt.

Die Kombination eines Aromas, eine Geschmacks- und/oder Duftstoffs kann eine beliebige Anzahl, bspw. 2 oder mehr, wie 3 oder mehr, 4 oder mehr, 5 oder mehr, 6 oder mehr, 7 oder mehr, 8 oder mehr, 9 oder mehr, oder 10 oder mehr, eines Aromas, eines Geschmacks- und/oder Duftstoffs umfassen. Es ist hierbei klar, dass der unbestimmte Artikel "ein" eine Vielzahl verschiedener Elemente umfassen kann.

Beispielhafte bevorzugte "flüchtige Fraktionen" weisen einen oder mehrere der nachstehend aufgeführten Inhaltsstoffe auf; Erdbeeraroma: Ethylbutyrat, Ethylmethylbutyrat-2, Methylcapronat, Linalool, gamma-Decalacton: Himbeeraroma: alpha- und beta-Ionon, delta-Decalacton, Hydroxybenzylaceton, 3Z-Hexenol; Apfelaroma: 2E-Hexenol, 3Z-Hexenol, 2E-Hexenal, Hexanal, Ethylbutyrat, Ethylmethylbutyrat-2, beta-Damascenon; Orangenaroma: Ethylbutyrat, Methylbutyrat, Octanal, Hexanal, Linalool; Grapefruitaroma: Nootkaton, Ethylbutyrat, Linalool, p-Menthenthiol-1,8; Zitronenaroma: Citral, Geraniol, Caryophyllen; Kirschenaroma: Benzaldehyd, 2E-Hexenol, 2E-Hexenal, Hexanal, beta-Damascenon; Pfirsicharoma: gamma-Decalacton, 2E-Hexenol, beta-Damascenon, Linalooloxid; Bananenaroma: Isoamylacetat; Birnenaroma: Ethyl-2E,4Z-decadienoat; Aroma der Schwarzen Johannisbeere: 8-Mercapto-p-Menth-1-en-3-on; Kaffeearoma: beta-Damascenon, Furfurylthiol-2, 4-Vinylguaiacol, isomere Isopropylmethoxypyrazin, isomere Ethyldimethylpyrazin; Grünteearoma: 3-Z-Hexenol, Indol, Methyljasmonat, Jasminlacton; Zwiebelaroma: Dipropyldisulfid, Dipropyltrisulfid, Methylpropyldisulfid; Fleischaroma: 2E,4Z,7Z-Tridecatrienal, 2E,5Z-Undecadienal, 2E,4Z-Decadienal; Reisaroma: 2-Acetyl-1-pyrrolin; Octanal, Nonanal; Milcharoma: 1-Octen-3-on, 1-Octen-3-ol, 4-Ocanolid, 5-Octanolid; Tomatenaroma: 3Z-Hexenol, beta-Damascenon; Mintaroma: L-Menthol, Menthon, L-Carvon; Bieraroma: Isoamylacetat, Phenylethanol, Ethylbutyrat; und Weinaroma: Weinlacton, Menthofurolacton. Es ist klar, dass die vorstehend genannten Inhaltsstoffe lediglich beispielhaften Charakter aufweisen und gemäß verschiedenen Faktoren, bspw. Art, Unterart, Wachstums-, Ernte-, Lagerbedingungen, etc., variieren können, bzw. verschiedene Stoffe durch andere ersetzt sein können.

Eine "Lebensmittelzubereitung" wie hierin verwendet betrifft jegliche Art von Lebensmittel, insbesondere wässrige Lebensmittelzubereitungen bzw. mit Wasser versetzte Lebensmittel, bspw. Pürees oder Breis, und Getränke, insbesondere Säfte, bspw. Frucht- oder Beerensäfte, und Alkohol enthaltende Getränke, bspw. Wein, Fruchtwein, Sekt und Bier. Dem Fachmann ist klar, welchen Wassergehalt eine wässrige Lebensmittelzubereitung, insbesondere ein Saft und/oder ein Alkohol enthaltendes, aufweist, um bspw. einer Schleuderkegelkolonnen-Destillation unterzogen zu werden.

Bevorzugte Ethanol-haltige Lebensmittel sind bspw. alkoholhaltige Getränke als solche, oder alkoholhaltige Getränke in verdünnter Form.

Eine "Schleuderkegelkolonne" bzw. die der Verfahrensschritt (a) zugrundeliegende "Destillation durch eine Schleuderkegelkolonne" betrifft ein schonend durchgeführtes Destillationsverfahren. Dabei werden leichter siedende Komponenten in einem Gasstrom, der vorzugsweise im Gegenstromprinzip zur flüssigen Lebensmittelphase geführt wird, extrahiert. Rotierende Teller, die in ihrem Aufbau ähnlich einer Zentrifuge sind, bilden konische (Heiz-)Flächen, auf deren Innenseite alkoholhaltiges Produkt über den Düsenstock eingebracht und in Form eines dünnen Flüssigkeitsfilms über Zentrifugalkräfte nach außen beschleunigt wird. Der Heizdampf (gasförmige Phase) steigt vom unteren Ende der Tellerpackung durch die Tellerzwischenräume, unter ständigem Wärme- und Stoffaustausch, nach oben, wodurch sich leichter siedende Komponenten im Brüdenstrom und schwerer siedende Komponenten in der Flüssigkeit anreichern. Durch Lamellen an der Unterseite der Teller werden turbulente Strömungsbedingungen beider Phasen sichergestellt. Das Verfahren zeichnet sich durch besonders kurze Kontaktzeiten von bspw. < 1 s, vorzugsweise < 0.1 s, aufgrund der zentrifugalen Beschleunigung und einer geringen thermischen Belastung der Produkte durch die Ausführung unter Vakuum oder einem Teilvakuum aus. Die Destillation kann kontinuierlich oder als Batch-Destillation erfolgen. Die "Destillation durch eine Schleuderkegelkolonne" wird vorzugsweise wie in der DE 36 86 492 T2, deren Inhalt durch Bezugnahme in Gänze hierin aufgenommen ist, dargelegt ausgeführt. Schleuderkegelkolonnen als solche sind dem Fachmann bekannt und können z.B. von Flavourtech, Australien, bspw. die SCC 1,000, bezogen werden.

Durch die Destillation durch eine Schleuderkegelkolonne erhaltenes Stoffgemisch wird ferner einem den Verfahrensschritten (b) zugrundeliegenden Sorptionsverfahren und (c) zugrundeliegenden Desorptionsverfahren unterzogen. Ein "Sorptions-/Desorptionsverfahren" betrifft im Stand der Technik bekannte Adsorptions-/Desorptionsverfahren oder Absorptions-/Desorptionsverfahren, vorzugsweise ein Adsorptions-/Desorptionsverfahren.

Bei der adsorptiven Aufkonzentrierung von wässrigen Lösungen, wird eine wässrige Lösung, insbesondere das durch Destillation durch eine Schleuderkegelkolonne erhaltene Stoffgemisch, durch eine Schüttung eines Ionenaustauschharzes, vorzugsweise eines mit organischen Resten oberflächen-modifizierten porösen Sorbens, geleitet und die Schüttung danach mit einem liquiden Desorbens, vorzugsweise Wasser, insbesondere Wasserdampf, oder einer wässrigen Lösung, bspw. einer wässrigen Lösung mit einer im Vergleich zur wässrigen Lösung geringen Menge eines organischen Lösungsmittels, bspw. Ethanol, eluiert.

Alternativ oder zusätzlich kann die Elution unter Zuhilfenahme einer wässrigen Lebensmittelzubereitung, insbesondere des Safts und/oder des Alkohol enthaltenden Getränks, erfolgen. Die wässrige Lebensmittelzubereitung, insbesondere der Saft und/oder das Alkohol enthaltende Getränk, kann hierbei (a) als solches, d.h. unverdünnt, (b) mit einem Lösungsmittel, insbesondere mit Wasser, verdünnt, oder (c) in konzentrierter Form verwendet werden. Als beispielhafte und bevorzugte konzentrierte Form der wässrigen Lebensmittelzubereitung, insbesondere des Safts und/oder des Alkohol enthaltenden Getränks, ist hierbei das Stoffgemisch aus Schritt (a) und/oder die flüchte Fraktion aus Schritt (c) zu nennen. Es kann weiterhin vorteilhaft sein, bspw. das Stoffgemisch aus Schritt (a) und/oder die flüchte Fraktion aus Schritt (c) nicht als solches sondern in Kombination mit einem oder mehreren ausgewählt aus der Gruppe bestehend aus einem Lösungsmittel und einer wässrigen Lebensmittelzubereitung, insbesondere dem Saft und/oder dem Alkohol enthaltenden Getränk, einzusetzen.

Im Rahmen der vorliegenden Erfindung können prinzipiell alle Adsorptionsmaterialien verwendet werden, die üblicherweise für Adsorptions-/Desorptionsverfahren zum Einsatz gelangen.

Eine für die Aufnahme des Adsorptionsmaterials geeignete Vorrichtung ist üblicherweise eine Säule aus Glas oder Edelstahl, wobei das innere Volumen für gewöhnlich wenige Milliliter, bspw. 10 ml, bis zu 1000 Liter, bevorzugt im Bereich von 1 I bis 750 I, wie bspw. 25 I bis 500 I, 50 l bis 250 I, oder 75 l bis 100 I, beträgt.

Bevorzugte Adsorptionsmaterialien, die in einer Säule verwendet werden, sind verschiedenartig vernetzte Polystyrole, bevorzugt Copolymerate aus Ethylvinylbenzol und Divinylbenzol, Vinylpyrrolidon und Divinylbenzol, Vinylpyridin und Divinylbenzol, Styrol und Divinylbenzol, aber auch andere Polymere, wie bevorzugt Polyaromate, Poly(meth)-acrylate, Polypropylen, Polyester, Polytetrafluorethylen, etc.. Die Adsorptionsmaterialen können ferner Oberflächenmodifikationen aufweisen. Besonders bevorzugt sind Polystyrole, insbesondere nicht-oberflächenmodifizierte, quervernetzt makroporöse Polystyrole, bspw. LEWAPLUS^{®}, LEWATIT^{®}, LEWABRANE^{®}, BAYOXIDE^{®} (Lanxess, Deutschland), vorzugsweise LEWATIT^{®}, mehr bevorzugt ein LEWATIT^{®} S oder ein LEWATIT^{®} VP OC, wie bspw. LEWATIT^{®} S 100 G1, LEWATIT^{®} S 1567, LEWATIT^{®} S 1568, LEWATIT^{®} S 4528, LEWATIT^{®} S 5328, , LEWATIT^{®} S 7468, LEWATIT^{®} S 7968, LEWATIT^{®} S 9167, LEWATIT^{®} VP OC 1064, LEWATIT^{®} VP OC 1065, LEWATIT^{®} VP OC 1074 und LEWATIT^{®} VP OC 1600.

Für das Adsorptionsverfahren wird das Stoffgemisch vorzugsweise als solches, alternativ in Kombination mit einem Lösungsmittel, verwendet. Beispielhafte Lösungsmittel sind Wasser oder Wasser zusammen mit einem organischen Lösungsmittel, vorzugsweise ausgewählt aus der Gruppe bestehend aus Methanol, Ethanol, Propanol, n-Propanol, i-Propanol, Ethylacetat, Diacetin, Triacetin, flüssiges Kohlendioxid, lebensmittelgeeignete Fluorchlorkohlenwasserstoffe und pflanzliche Triglyceride.

Bevorzugt wird ein Schleuderkegelkolonnen-Destillat als Ethanol-haltiges Lösungsmittel verwendet. Hierbei umfasst Schritt (b) des erfindungsgemäßen Verfahrens in Kontakt Bringen eines ersten Anteils des Stoffgemischs aus Schritt (a) mit einem Sorbens zum Erhalten eines beladenen Sorbens, und Verwenden eines zweiten Anteils des Stoffgemischs aus Schritt (a) als das liquide Desorbens oder eines Bestandteils davon. Noch mehr bevorzugt handelt es sich bei dem zweiten Anteil des Stoffgemischs aus Schritt (a) lediglich um einen Bestandteil des liquiden Desorbens, wobei der oder die anderen Bestandteile des liquiden Desorbens ein Lösungsmittel und/oder die wässrige Lebensmittelzubereitung, insbesondere ein Saft und/oder ein Alkohol enthaltendes Getränk, aufweisen. So kann bspw. der erste Anteil 50 bis 90 Massen-%, bspw. 60 bis 80 Massen-%, wie 70 Massen-%, betragen, der zweite Anteil 10 bis 50 Massen-%, bspw. 20 bis 40 Massen-%, wie 30 Massen-%, betragen, jeweils bezogen auf das Gesamtvolumen des Stoffgemischs aus Schritt (a). Der zweite Anteil wird vorzugsweise mit einem Lösungsmittel und/oder der wässrigen Lebensmittelzubereitung, insbesondere dem Saft und/oder dem Alkohol enthaltenden Getränk, mehr bevorzugt in einem Massenverhältnis von 4:1 bis 1:4, bspw. 3:1 bis 1:3, 2:1 bis 1:2, oder 1:1, gemischt und als das liquide Desorbens verwendet.

Die Strömungsgeschwindigkeit des Stoffgemischs als solchem, alternativ in Kombination mit einem Lösungsmittel, kann zumindest teilweise während des Adsorptionsvorganges 0,2 bis 10 cm/s betragen. Der Parameter der Strömungsgeschwindigkeit ist in diesem Zusammenhang für die Ausbildung der lokalen Verteilungskoeffizienten der ein oder mehreren Geschmack- und/oder Duftstoffe zwischen dem Adsorptionsmaterial und der Wasserphase mit verantwortlich. Bevorzugt liegt die Strömungsgeschwindigkeit im Bereich von 0,5 bis 9 cm/s, 0,75 bis 8 cm/s, 1,0 bis 7 cm/s, 1,5 bis 6 cm/s, 2,0 bis 5 cm/s, 2,5 bis 4 cm/s, oder 3,0 bis 3,5 cm/s. Dem Fachmann sind die geeigneten Bedingungen geläufig.

Zur Adsorption/Desorption eingesetzte Säulen weisen bspw. eine Säulengröße bzw. ein Säulenvolumen (BV) von 0,1 l bis 500 I, wie bspw. 20 I oder 300 l, auf. Das Verhältnis des Inneren Durchmessers zur Länge bzw. Höhe dieser Säulen beträgt vorzugsweise 0,05 bis 0,5, wie bspw. 0,1 bis 0,4, oder 0,2 bis 0,3. Mehr bevorzugt werden Säulen verwendet, die das vorstehend genannte Säulenvolumen und/oder Verhältnis des Inneren Durchmesser zur Länge bzw. Höhe der Säulen aufweisen. Eine beispielhafte besonders bevorzugte Säule weist eine Säulengröße bzw. ein Säulen-volumen (BV) von 300 I, einen inneren Durchmesser von 0,51 m und eine Länge bzw. Höhe von 1,45 m auf.

Die Temperatur des Stoffgemischs als solchem, alternativ in Kombination mit einem Lösungsmittel, liegt während des Adsorptionsvorganges im Bereich von 0 °C bis 70 °C, vorzugsweise 10 °C bis 50 °C, wie bspw. 20 °C bis 35 °C, oder 25 °C bis 30 °C. Die Temperatur ist ebenfalls für die Ausbildung des lokalen Verteilungskoeffizienten mitverantwortlich.

Der Gegendruck während des Adsorptionsvorgangs kann 0,1 bar bis 4,0 bar betragen und bspw. mit einem herkömmlichen Manometer bestimmt werden. Der Gegendruck während des Adsorptionsvorgangs ist derjenige Druck, der durch den Widerstand des Adsorptionsmaterials entsteht, wenn man das Stoffgemisch als solches, alternativ in Kombination mit einem Lösungsmittel, durch die mit Adsorptionsmaterial bepackte Säule pumpt. Bevorzugt ist ein Gegendruck im Bereich von 0,3 bar bis 2,5 bar, besonders bevorzugt von 0,8 bar bis 1,5 bar.

Bei der Desorption kann die Strömungsgeschwindigkeit des gewählten liquiden Desorbens 0,1 bis 20,0 Säulenvolumen/ Stunde (BV/h), bspw. 0,2 bis 15,0 BV/h, 0,3 bis 12,0 BV/h, 0,4 bis 11,0 BV/h, 0,5 bis 10,0 BV/h, 0,6 bis 9,0 BV/h, 0,7 bis 8,0 BV/h, 0,9 bis 7,0 BV/h, 1,0 bis 6,0 BV/h, 1,25 bis 5,0 BV/h, 1,5 bis 4,0 BV/h, 1,75 bis 3,5 BV/h, 2,0 bis 3,0 BV/h, 2,25 bis 2,75 BV/h, oder 2,5 BV/h, betragen. Die Temperatur des liquiden Desorbens beträgt für gewöhnlich 0 °C bis 70 °C, vorzugsweise 10 °C bis 50 °C, wie bspw. 20 °C bis 35 °C, oder 25 °C bis 30 °C, kann jedoch bei der Thermodesorption auch höher liegen, bspw. bei einer Temperatur von 90 bis 200°C. Die Temperatur ist ebenfalls für die Ausbildung des lokalen Verteilungskoeffizienten mitverantwortlich.

Das bei der Desorption verwendete Gesamtvolumen des gewählten liquiden Desorbens beträgt für gewöhnlich 0,2 bis 5,0 Säulenvolumen (BV), bspw. 0,3 bis 4,5 BV, 0,4 bis 4,0 BV, 0,5 bis 3,5 BV, 0,6 bis 3,0 BV, 0,7 bis 2,5 BV, 0,8 bis 2,0 BV, 0,9 bis 1,5 BV, oder 1 BV.

Der Gegendruck während des Desorptionsvorgangs kann 0,05 bar bis 2,0 bar betragen und bspw. mit einem herkömmlichen Manometer bestimmt werden. Der Gegendruck während des Desorptionsvorgangs ist derjenige Druck, der durch den Widerstand des Adsorptionsmaterials entsteht, wenn das liquide Desorbens durch die mit Adsorptionsmaterial bepackte Säule gepumpt wird. Bevorzugt ist ein Gegendruck im Bereich von 0,1 bar bis 1,0 bar, besonders bevorzugt von 0,2 bar bis 0,5 bar.

Die Richtungen des Adsorptionsvorgangs und des Desorptionsvorgangs können gleichgerichtet oder entgegengesetzt sein.

Das Sorptionsverfahren und/oder das Desorptionsverfahren wird vorzugsweise wie in der EP 2 075 320 A1, deren Inhalt durch Bezugnahme in Gänze hierin aufgenommen ist, dargelegt ausgeführt.

Mehr bevorzugt wird lediglich das Sorptionsverfahren, wie vorstehend insbesondere im Hinblick auf die EP 2 075 320 A1 darlegt, durchgeführt. Als Desorptionsverfahren wird insbesondere die thermische Desorption bzw. Thermodesorption verwendet.

Es hat sich überraschend gezeigt, dass insbesondere die thermische Desorption - ein im Stand der Technik aufgrund einer hohen thermischen Belastung von Inhaltsstoffen als ungeeignetes zur Konzentrierung von Inhaltsstoffen angesehenes Verfahren - ein kostengünstiges Desorptionsverfahren darstellt, wobei die erwünschten Inhaltstoffe in hoher Menge im Vergleich zu der Gesamtmenge an unerwünschten Inhaltsstoffen, insbesondere Ethanol, erhalten werden können. Die thermische Desorption ist mithin nicht nur im Rahmen der Analytik einsetzbar, sondern ist auch zur Isolierung von erwünschten Inhaltsstoffen, insbesondere Aromastoffen, in einem (groß-)technischen bzw. industriellen Maßstab geeignet. Ein weiterer Vorteil besteht darin, dass im Vergleich zur herkömmlichen Desorption bei der thermischen Desorption niedrigere Volumina zur Elution verwendet werden können, wie bspw. 0,2 bis 3,0 BV/h, 0,5 bis 2,0 BV/h, oder 1 bis 1,5 BV/h.

Bei der thermischen Desorption kann mit Inertgasen, bspw. Stickstoff, Kohlenstoffdioxid, Helium, Neon, und Argon, sowie erhitztem Lösungsmittel, insbesondere erhitztem Wasser, drucklos sowie unter Druck eluiert werden. Alternativ kann auch eine Kombination der vorstehend aufgeführten Desorbentien bzw. Elutionsmittel verwendet werden.

Bei der thermischen Desorption wird erhitztes Lösungsmittel, bspw. erhitztes Wasser, vorzugsweise über ein Pumpensystem, insbesondere ein Dampfleitungssystem nach Einstellung eines konstanten Drucks und/oder Temperatur, dem beladenen Sorbens zugeführt. Alternativ kann erhitztes Wasser lediglich durch reine Erhitzung des Restwassers am beladenen Sorbens zur Verfügung gestellt werden.

Bei der thermischen Desorption, bspw. der Wasserdampfdesorption mit erhitztem Wasser, kommt es üblicherweise zu Temperaturgradienten in dem Sorbens/der Adsorberfüllung, d.h. in Flussrichtung des Heißwasserdampfes, oder radial von außen bei aktiver Erwärmung des Säulenmantels, sowie ausgehend von weiteren Heizzonen, die an oder in dem Behälter für das beladene Sorbens, vorzugsweise einer Säule, enthalten sind. Üblicherweise ist eine möglichst schnelle Elution der flüchtigen Fraktion wünschenswert, u.U. auch notwendig, um einen thermischen Abbau der erwünschten Inhaltsstoffe, mithin eines Aromas, eines Geschmacks- und/oder Duftstoffs bzw. einer Kombination davon, zu zumindest teilweise oder in Gänze zu verhindern. Eine schnelle Elution bzw. eine niedrige Temperatur des Wasserdampfs kann ferner der Vermeidung unerwünschter Nebenreaktionen und der dabei ggf. auftretenden Entwicklung/Entstehung unerwünschter Stoffe beitragen.

Eine schnelle Elution wird vorzugsweise dadurch erreicht, dass der Lösungsmitteldampf, insbesondere Wasserdampf, durch Variation von Druck/Temperatur die Adsorberfüllung schnellstmöglich durchdringt. Dies ist u.a. von Faktoren, wie dem gewählten Sorbens, insbesondere dessen chemische Beschaffenheit, Teilchenabmessung bzw. deren Verteilung, Schüttdichte, und dem zur Aufnahme des Sorbens bestimmten Behälter, insbesondere einer Säule, abhängig. Es ist ersichtlich, dass diese Faktoren dem Fachmann entweder geläufig sind bzw. ohne weiteren Aufwand bestimmt werden können. Alternativ oder zusätzlich können in dem zur Aufnahme des Sorbens bestimmten Behälter, insbesondere einer Säule, eines oder mehrere Heizsysteme, bspw. ein oder mehrere auf Mikrowellen basierende Heizsysteme, vorgesehen sein, die den Wasserdampf möglichst schnell und gleichmäßig über das beladene Sorbens/ die Adsorberfüllung verteilen.

Vorzugsweise wird Wasserdampf bei einer Temperatur von 90 bis 200°C, vorzugsweise bei 92 bis 180°C, 94 bis 160°C, 96 bis 140°C, 98 bis 130°C, mehr bevorzugt 100 bis 120°C, wie bspw. 102°C bis 118°C, 104°C bis 116°C, 106°C bis 114°C, 108°C bis 112°C, oder 110°C, eingesetzt. Der dabei verwendete Druck beträgt 1 bis 25 bar, wie bspw. 1,2 bis 15 bar, 1,4 bis 10 bar, 1,6 bis 8 bar, 1,8 bis 6 bar, vorzugsweise 2,0 bis 5 bar, wie bspw. 2,5 bis 4,5 bar, 3 bis 4 bar, oder 3,5 bar.

Die vollständige Desorption kann mit einem Gesamtvolumen an Desorbens, das dem 1-bis 15-fachen, vorzugsweise dem 2- bis 10-fachen, bspw. dem 3- bis 9-fachen, 4- bis 8-fachen, 5- bis 7-fachen, oder 6-fachen, des Säulenvolumens entspricht, erfolgen.

Die Kondensation des Wasserdampfes kann bei -200 bis +20°C, wie bspw. -150 bis 15°C, -100 bis 10°C, -50 bis 5°C, vorzugsweise bei -20 bis 0°C, erfolgen.

Bei der Thermodesorption mit einem anderen Lösungsmittel als Wasser bzw. einem Lösungmittel-Wasser-Gemisch kann unter den gleichen, vorstehend aufgeführten Bedingungen vorgegangen werden. Dem Fachmann ist hierbei klar, dass andere Lösungsmittel ggf. andere Temperaturen für die Dampferzeugung erfordern.

Der Begriff "Fuselalkohol" wie hierin verwendet betrifft die in der (Rechts-)Medizin bekannten Begleitalkohole, wie bspw. Methanol, n-Propanol, Butanole, Amylalkohole und Hexanol.

Gemäß einer bevorzugten Ausführungsform der vorliegenden Erfindung wird die Schleuderkegelkolonnen-Destillation in Form einer Gegenstrom-Destillation bei einem Druck von 1 bis 500 mbar durchgeführt.

Es wurde gefunden, dass durch das Durchführen der Destillation als Gegenstrom Destillation bei einem Druck von 1 bis 500 mbar der Wirkungsgrad der Abtrennung der flüchtigen Stoffe erhöht werden kann. Vorzugsweise beträgt der Druck 5 mbar bis 450 mbar, wie bspw. 10 mbar bis 400 mbar, 15 mbar bis 350 mbar, 20 mbar bis 300 mbar, 25 mbar bis 250 mbar, 30 mbar bis 200 mbar, 35 mbar bis 150 mbar, 40 mbar bis 100 mbar, 45 mbar bis 90 mbar, 50 mbar bis 80 mbar, oder 60 mbar bis 70 mbar.

Gemäß einer weiteren bevorzugten Ausführungsform der vorliegenden Erfindung wird die Gegenstrom Destillation mit einem Gas durchgeführt, wobei das Gas ein Inertgas, vorzugsweise Stickstoff, Kohlenstoffdioxid, ein Edelgas, bspw. Helium, Neon, oder Argon, oder eine Mischung davon ist. Mehr bevorzugt wird eines oder mehrere von Stickstoff, Helium, oder Neon verwendet. Stickstoff ist besonders bevorzugt.

Gemäß noch einer weiteren bevorzugten Ausführungsform der vorliegenden Erfindung ist ein Strippverhältnis bei 1-10 : 1, vorzugsweise 2-9 : 1, wie bspw. 3-8 : 1, 4-7 : 1, oder 5-6 : 1, Rücklauf zu Abnahme.

"Strippen" bzw. "Stripping" wie hierin verwendet betrifft die Überführung von Verbindungen aus einer flüssigen Phase durch Desorptionsvorgänge in die Gasphase. Dazu wird bei der Schleuderkegelkolonnen-Destillation die Flüssigphase im Gegenstromprinzip mit einem Gas, vorzugsweise mit einem der vorstehend aufgeführten Inertgase, vorzugsweise mit Stickstoff, in Kontakt gebracht.

Gemäß einer bevorzugten Ausführungsform der vorliegenden Erfindung weist die wässrige Lösung eine Temperatur von 28 bis 70°C, vorzugsweise 30 bis 60°C, mehr bevorzugt 32 bis 50°C, auf.

Vorzugsweise wird die Verdampfungsgeschwindigkeit durch Erhöhung der Temperatur und Verringerung des Stripverhältnisses soweit erhöht, dass es zu keiner Verminderung der sensorischen Qualität kommt. Dadurch kann die bestmögliche Ausbeute erzielt werden. Der Durchfluss des Produktes und des Gases richtet sich dabei nach der Kolonnengröße und dem Druckabfall. Als Gas wird ein Inertgas, wie Stickstoff, verwendet, um die Oxidation und somit die Bildung von Störkomponenten zu vermindern.

Mehr bevorzugt ist bei der der Durchführung des Schrittes (a) Destillation eines Stoffgemischs aus dem Saft und/oder dem Alkohol enthaltenden Getränk, wobei die Destillation durch eine Schleuderkegelkolonne erfolgt, die Temperatur grundsätzlich ≤ 80°C, wie bspw. ≤ 75°C, oder ≤ 70°C. Dadurch kann die Zersetzung / der Abbau des Stoffgemischs oder Bestandteile davon wirksam verhindert werden. Noch mehr bevorzugt wird das gesamte erfindungsgemäße Verfahren bei einer Temperatur von ≤ 80°C, wie bspw. ≤ 75°C, oder ≤ 70°C, durchgeführt.

Vorzugsweise beträgt ein Verhältnis einer Menge des erhaltenen Destillats zu der Menge des eingesetzten Safts und/oder des Alkohol enthaltenden Getränks 1:10 bis 1:200, wie bspw. 1:20 bis 1:150, 1:30 bis 1:100 oder 1:40 bis 1:90.

Gemäß einer weiteren bevorzugten Ausführungsform der vorliegenden Erfindung ist das liquide Desorbens ein alkoholfreies Lösungsmittel, vorzugsweise Wasser oder Wasserdampf.

Ein bevorzugtes alkoholfreies Lösungsmittel ist Wasser oder Wasser mit 5 Massen-% oder weniger, 1 Massen-% oder weniger, 0,1 Massen-% oder weniger, 10⁻² Massen-% oder weniger, eines organischen, alkoholfreien Stoffes. Ein besonders bevorzugtes als liquides Desorbens verwendetes alkoholfreies Lösungsmittel ist Wasserdampf.

Es ist klar, dass die vorliegende Erfindung nicht auf alkoholfreie Lösungsmittel beschränkt ist, sondern vielmehr auch Alkohol haltige, insbesondere Ethanol haltige, Lösungsmittel, bspw. Ethanol-Wasser-Gemische, zum Einsatz gelangen können. Dies kann bspw. gegeben sein, wenn die flüchtige Fraktion aus einem Alkohol haltigen Getränk gewonnen wird und später zum Erhalten eines (ggf. verschiedenen) Alkohol haltigen Getränks diesem hinzugegeben wird.

Gemäß noch einer weiteren bevorzugten Ausführungsform der vorliegenden Erfindung ist das Sorbens ein mit organischen Resten oberflächenmodifizierter poröser Feststoff, vorzugsweise ein Polystyrol. Weitere Sorbenzien sind wie vorstehend aufgeführt.

Gemäß einer bevorzugten Ausführungsform der vorliegenden Erfindung weist das Stoffgemisch mehrere Bestandteile auf, wobei das beladene Sorbens alle der mehreren Bestandteile aufweist.

Gemäß einer weiteren bevorzugten Ausführungsform der vorliegenden Erfindung ist die Lebensmittelzubereitung der Saft und/oder das alkoholische Getränk.

Alternativ stellt die Lebensmittelzubereitung eine Fraktion des erfindungsgemäßen Verfahrens bereit, in der das/die Aroma/Aromen abgereichert sind. Mithin wird durch die flüchtige Fraktion das Aroma, der Geschmack oder der Duft, oder eine Kombination davon, eines entsprechend abgereicherten Safts und/oder alkoholischen Getränks zumindest teilweise, vorzugweise vollständig, wiederhergestellt.

Vorzugsweise ist der Saft ein Saft ausgewählt aus der Gruppe bestehend ausgewählt aus der Gruppe bestehend aus Fruchtsaft, Beerensaft und Gemüsesaft, und/oder das Alkohol enthaltende Getränk ist ausgewählt aus der Gruppe bestehend aus Wein, Fruchtwein, bspw. Fruchtwein aus Äpfeln, weinhaltigen Getränken, bspw. Sekt, Bier und bierhaltigen Getränken. Mehr bevorzugt ist die Frucht und/oder die Beere des Safts ausgewählt ist aus der Gruppe bestehend aus Zitrusfrucht (Citrus aurantium), insbesondere Zitrone, Orange, Apfelsine, Mandarine, Clementine, Grapefruit, Pampelmuse, Limone, Limette, Kumquat, Tangor und Tangelo, Melone, Kiwi, Papaya, Avocado, Acerola, Bärentraube, Brombeere, Blaubeere, Boysenbeere, Kirsche, virginische Traubenkirsche, Moltebeere, rote und schwarze Johannisbeere, Dattel, Kratzbeere (Rubus caesius), Holunderbeere, Traube, Stachelbeere, Huckleberry, Loganbeere, Olallieberry, Maulbeere, Rosine, Plains Berry, Prairie Berry, Preiselbeere, Himbeere, Birne, Pracht-Himbeere (Rubus spectabilis), Sanddornfrucht, Schlehenfrucht, Erdbeere, Weiße Zimt-Himbeere (Rubus parviflorus), Bocksdornfrucht, Weinbeere, Heidelbeere, Apfel, Rhabarber, Passionsfrucht, Pflaume, bspw. Zwetschge, Mirabelle, Aprikose, Nektarine, Quitte, Kiwi, Sternfrucht, Litschie, Ananas, Guave, Papaya, Maracuja und Mango und Pfirsich. Mehr bevorzugt ist das Gemüse des Safts ausgewählt aus der Gruppe bestehend aus Möhre, Tomate, Gurke, Rettich, Rote Rübe, Sauerkraut, Sellerie und Spinat.

Weitere Aromen, Geschmacks- und Duftstoffe, deren Kombinationen, bzw. Lebensmittel, insbesondere Getränke, die diese Aromen, Geschmacks- und Duftstoffe enthalten, können bspw. der DE 10 2016 105 997 A1 entnommen werden, deren Inhalt durch Bezugnahme in Gänze hierin aufgenommen ist.

Die dem Saft zugrundeliegende Frucht und/oder Beere kann herstellungsbedingt gelagert sein, vorzugsweise für einen Zeitraum von 6 Std. bis 48 Std., bspw. 12 Std. bis 36 Std., 18 Std. bis 30 Std., oder 24 Std., ohne dass die flüchtige Fraktion im Hinblick auf das der wässrigen Lebensmittelzubereitung zugrundeliegende Lebensmittel, bspw. durch bei der Lagerung auftretende Gärprozesse, sensorisch beeinträchtigt wird. Gleiches gilt für andere Lebensmittel, bspw. Lebensmittel die die im Rahmen eines Breis oder Pürees als wässrige Lebensmittelzubereitung eingesetzt werden.

Gemäß noch einer weiteren bevorzugten Ausführungsform der vorliegenden Erfindung weist die flüchtige Fraktion einen oder mehrere Geschmacks- und/oder Geruchsstoffe / Aromen / Kombinationen davon, vorzugsweise alle, der alkoholhaltigen Lebensmittelzubereitung auf.

Gemäß einer weiteren bevorzugten Ausführungsform der vorliegenden Erfindung beträgt ein Verhältnis des in der flüchtigen Fraktion enthaltenen Ethanols zu der Summe an Aromastoffen V(E/A) 0,005 bis 20, vorzugsweise 0,1 bis 10.

Ein möglichst geringes V(E/A) von bspw. 0,005 bis 20, vorzugsweise 0,1 bis 10, ist im Allgemeinen vorzuziehen. Alternativ kann die flüchtige Fraktion aus dem Saft und/oder dem Alkohol enthaltenden Getränk ebenso mit einem Verhältnis Ethanol/Summe Aromastoffe (V(E/A)) von 0,005 bis 1000, wie bspw. 5 bis 500, vorzugsweise 10 bis 100, bspw. 20 bis 90, 30 bis 80, 40 bis 70, oder 50 bis 60, gewonnen werden.

Die flüchtige Fraktion kann bei ethanolischer Desorption, d.h. mit einem alkoholhaltigen Desorbens, einen V(E/A) von bspw. 0,5 bis 20, bspw. 1 bis 15, vorzugsweise 2 bis 10, bspw. 3 bis 9, 4 bis 8, 5 bis 7, oder 6 aufweisen.

Bei der Thermodesorption, insbesondere Wasserdampfdesorption, kann ein V(E/A) von 0,005 bis 20, bspw. 0,01 bis 10, vorzugsweise 0,1 bis 1, bspw. 0,2 bis 0,9, 0,3 bis 0,8, 0,4 bis 0,7, oder 0,5 bis 0,6, erhalten werden. Es wurde in diesem Zusammenhang erstaunlicherweise gefunden, dass durch die Thermodesorption mit einem alkoholfreien Desorbens, insbesondere die Wasserdampfdesorption, ähnlich gute bzw. sogar bessere Elutionseigenschaften als durch ein alkoholhaltiges Desorbens erzielt werden können.

Durch die Thermodesorption mit einem alkoholfreien Desorbens kann im Allgemeinen neben einem (inhärent) niedrigeren V(E/A) ebenso eine höhere Ausbeute an erwünschten Inhaltsstoffen/Aromastoffen im Vergleich zur Desorption bei einer Temperatur unterhalb von 70 bis 80°C, bspw. Umgebungstemperatur.

Ein niedriges Verhältnis an Alkohol, insbesondere Ethanol, zu einem Aroma, Geschmacksstoff, Duftstoff, oder einer Kombination davon wird durch ein geringes Gesamtvolumen zur Desorption/Elution von bspw. 0,2 bis 1 BV, 0,3 bis 0,9 BV, 0,4 bis 0,8 BV, 0,5 bis 0,7 BV, oder 0,6 BV begünstigt. Vorzugsweise wird daher ein derartig geringes Gesamtvolumen eingesetzt.

Somit sind die erwünschten Inhaltsstoffe, insbesondere Aromastoffe, im Vergleich zu Ethanol angereichert und es ist möglich 1-500 mg/kg bevorzugt 10-200mg/kg Aromastoffe dem Lebensmittel zu dosieren, ohne einen Ethanolgehalt von 0,05 Massen-%, entsprechend 500 mg/kg, in der Endanwendung, insbesondere dem erfindungsgemäßen zum Verzehr geeigneten Produkt, zu überschreiten.

Gemäß einer bevorzugten Ausführungsform der vorliegenden Erfindung wird die erfindungsgemäße flüchtige Fraktion in einem zum Verzehr geeigneten Produkt, vorzugsweise ausgewählt aus der Gruppe bestehend aus Nahrungsmitteln, Genussmitteln, Getränken, Halbfertigwaren, Mundhygiene- sowie kosmetischen oder pharmazeutischen Produkten, verwendet.

Gemäß einer weiteren bevorzugten Ausführungsform der vorliegenden Erfindung wird die erfindungsgemäße flüchtige Fraktion zur Herstellung eines zum Verzehr geeigneten Produkts, vorzugsweise eines Nahrungsmittels, Genussmittels, Getränks, einer Halbfertigware, eines Mundhygiene-Produkts, eines kosmetischen Produkts oder eines pharmazeutischen Produkts verwendet.

Gemäß der vorliegenden Erfindung ist ein zum Verzehr geeignetes Produkt bevorzugt ein Nahrungsmittel, Genussmittel und/oder Getränk, das dazu bestimmt ist, in eine Mundhöhle eingebracht zu werden, dort eine bestimmte Zeit zu verbleiben und anschließend entweder geschluckt, d. h. verzehrt (z. B. Lebensmittel), oder wieder aus der Mundhöhle entfernt zu werden, wie bspw. ein Kaugummi. Hierzu zählen auch alle Stoffe oder Erzeugnisse, die dazu bestimmt sind, in verarbeitetem, teilweise verarbeitetem oder unverarbeitetem Zustand von Menschen oder Tieren aufgenommen zu werden. Insofern zählen auch alle Stoffe dazu, die dem Lebensmittel bei seiner Herstellung, Verarbeitung oder Bearbeitung zugesetzt werden. Zum Verzehr geeignete Produkte können nicht nur für den menschlichen Gebrauch, sondern auch im Rahmen der Tierhaltung bzw. Tierpflege eingesetzt werden. Ein beispielhaftes zum Verzehr geeignete Produkt ist ein Futtermittel.

Kaugummis umfassen im Allgemeinen aus einer Kaugummibase, d. h. einer beim Kauen plastisch werdenden Kaufmasse, aus Zucker in verschiedenen Arten, Zuckeraustauschstoffen, Süßstoffen, Zuckeralkoholen, Feuchthaltemitteln, Verdickern, Emulgatoren, verkapselte und/oder nicht verkapselte Aromen und/oder Stabilisatoren. Gängige Kaugummibasen umfassen neben traditionell eingesetzten natürlichen Harzen oder dem Naturlatex Chicle heute zumeist Elastomere wie Polyvinylacetate (PVA), Polyethylene, (nieder- oder mittelmolekulare) Polyisobutene (PIB), Polybutadien, Isobuten-Isopren Copolymere (Butyl Rubber), Polyvinylethylether(PVE), Polyvinylbutylether, Copolymere von Vinylestern und Vinylethern, Styrol-Butadien-Copolymere (Styrol-Butadien-Rubber, SBR) oder Vinyl-Elastomere, z.B. auf Basis Vinylacetat/Vinyllaurat, Vinylacetat/Vinylstearat oder Ethylen/Vinylacetat, sowie Mischungen dieser Elastomere, wie bspw. in EP 0242 325, US 4,51 8,61 5, US 5,093,136, US 5,266,336 US 5,601,858 oder US 6,986,709 beschrieben. Daneben umfassen Kaugummibasen weitere Bestandteile wie bspw. (mineralische) Füllstoffe, Weichmacher, Emulgatoren, Antioxidantien, Wachse, Fette oder fette Öle, wie bspw. gehärtete (hydrierte) pflanzliche odertierische Fette, Mono-, Di- oder Triglyceride. Geeignete (mineralische) Füllstoffe sind bspw. Calciumcarbonat, Titandioxid, Siliciumdioxid, Talkum, Aluminiumoxid, Dicalciumphosphat, Tricalciumphosphat, Magnesiumhydroxid und deren Mischungen. Geeignete Weichmacher bzw. Antiklebemittel (detackifier) sind bspw. Lanolin, Stearinsäure, Natriumstearat, Ethylacetat, Diacetin (Gylcerindiacetat), Triacetin (Gylcerintriacetat), und Triethylcitrat. Geeignete Wachse sind bspw. Paraffin Wachse, Candelilla Wachs, Carnauba Wachs, mikrokristalline Wachse und Polyethylen Wachse. Geeignete Emulgatoren sind bspw. Phosphatide wie Lecithin, Mono- und Diglyceride von Fettsäuren, z.B. Glycerinmonostearat.

Bevorzugte, zum Verzehr geeignete Produkte (Nahrungsmittel, Genussmittel, Getränke), sind ausgewählt aus der Gruppe bestehend aus Backwaren, vorzugsweise ausgewählt aus der Gruppe bestehend aus Brot, Trockenkekse, Kuchen und sonstiges Gebäck; Süßwaren, vorzugsweise ausgewählt aus der Gruppe bestehend aus Schokolade, Schokoladenriegelprodukte, sonstige Riegelprodukte, Fruchtgummi, Hart- und Weichkaramellen und Kaugummi; alkoholische oder nichtalkoholische Getränke, vorzugsweise ausgewählt aus der Gruppe bestehend aus Kaffee, Tee, Wein, Fruchtwein, weinhaltige Getränke, Bier, bierhaltige Getränke, Liköre, Schnäpse, Weinbrände, fruchthaltige Limonaden, isotonische Getränke, Erfrischungsgetränke, Nektare, Obst- und Gemüsesäfte und Frucht- oder Gemüsesaftzubereitungen; Instantgetränke, vorzugsweise ausgewählt aus der Gruppe bestehend aus instant-Kakao-Getränke, Instant-Tee-Getränke und instant-Kaffeegetränke; Fleischprodukte, vorzugsweise ausgewählt aus der Gruppe bestehend aus Schinken, Frischwurst- oder Rohwurstzubereitungen und gewürzte oder marinierte Frisch- oder Pökelfleischprodukte; Eier oder Eiprodukte, vorzugsweise ausgewählt aus der Gruppe bestehend aus Trockenei, Eiweiß und Eigelb; Getreideprodukte, vorzugsweise ausgewählt aus der Gruppe bestehend aus Frühstückscerealien, Müsliriegel und vorgegarte Fertigreis-Produkte; Milchprodukte, vorzugsweise ausgewählt aus der Gruppe bestehend aus Milchgetränke, Milcheis, Joghurt, Kefir, Frischkäse, Weichkäse, Hartkäse, Trockenmilchpulver, Molke, Butter, Buttermilch und teilweise oder ganz hydrolisierte milchproteinhaltige Produkte; Produkte aus Sojaprotein oder anderen Sojabohnen-Fraktionen, vorzugsweise ausgewählt aus der Gruppe bestehend aus Sojamilch und daraus gefertigte Produkte, sojalecithinhaltige Zubereitungen, fermentierte Produkte wie Tofu oder Tempe oder daraus gefertigte Produkte und Sojasoßen; Fruchtzubereitungen, vorzugsweise ausgewählt aus der Gruppe bestehend aus Konfitüren, Fruchteis, Fruchtsoßen und Fruchtfüllungen; Gemüsezubereitungen, vorzugsweise ausgewählt aus der Gruppe bestehend aus Ketchup, Soßen, Trockengemüse, Tiefkühlgemüse, vorgegarte Gemüse, in Essig eingelegte Gemüse und eingekochte Gemüse; Knabberartikel, vorzugsweise ausgewählt aus der Gruppe bestehend aus gebackenen oderfrittierten Kartoffelchips oder Kartoffelteigprodukte, Brotteigprodukte und Extrudate auf Mais- oder Erdnussbasis; Produkte auf Fett- und Ölbasis oder Emulsionen derselben, vorzugsweise ausgewählt aus der Gruppe bestehend aus Mayonnaise, Remoulade, Dressings und Würz-Zubereitungen; sonstige Fertiggerichte und Suppen, vorzugsweise ausgewählt aus der Gruppe bestehend aus Trockensuppen, Instant-Suppen, vorgegarte Suppen, Gewürze, Würzmischungen und Aufstreuwürzungen (seasonings), die bspw. im Snackbereich Anwendung finden. Der Gesamtanteil an erfindungsgemäßen Aromakonzentraten sowie deren bevorzugten Ausgestaltungen in einem erfindungsgemäßen (zu Verzehr geeigneten) Produkt liegt, je nach Produkttyp, regelmäßig im Bereich von 0,001 bis 10000 ppm, bevorzugt im Bereich von 0,01 bis 100 ppm in der Endanwendung.

Zum Verzehr geeignete Produkte können ebenfalls Produkte umfassen, die im Rahmen der Tierhaltung bzw. Tierpflege, bspw. als Futtermittel, zur Anwendung gelangen.

Die zum Verzehr geeigneten Produkte im Sinne der vorliegenden Erfindung können auch als Halbfertigwaren zur Herstellung weiterer erfindungsgemäßer (zum Verzehr geeigneter) Produkte, vorzugsweise Nahrungsmittel, Genussmittel und/oder Getränke, eingesetzt werden. Hierbei werden die erfindungsgemäßen Halbfertigwaren zur Aromatisierung von daraus gefertigten Produkten als Fertigwaren verwendet. Der Gesamtanteil an den im Rahmen des erfindungsgemäßen Verfahrens gewonnen Geruchs- und/oder Geschmacksstoffen / Aromen / Kombinationen davon in einem erfindungsgemäßen Halbfertigprodukt liegt, je nach Produkttyp, regelmäßig im Bereich von 0,01 bis 10000 ppm, bevorzugt im Bereich von 0,02 bis 200 ppm.

Erfindungsgemäße kosmetische oder pharmazeutische Zubereitungen lassen sich auch als Emulsion vom Typ "Wasser-in-Öl" (W/O), vom Typ "Öl-in-Wasser" (O/W), oder multiple Emulsionen, z.B. vom Typ Wasser-in-Öl-in-Wasser (W/O/W), PIT-Emulsion, Pickering-Emulsion, Mikro-Emulsion oder Nano-Emulsion formulieren; besonders bevorzugte Emulsionen sind vom Typ "Öl-in-Wasser" (O/W), oder vom Typ "Wasser-in-Öl-in-Wasser" (W/O/W). Die erfindungsgemäßen kosmetischen Zubereitungen können ferner insbesondere formuliert sein als, Stift, Stick, Aerosol, Spray, sprühfähigen Emulsionen, Schaum, Tränkungslösung, z.B. für kosmetische Tücher, Reinigungsmittel wie Reinigungsmilch, Reinigungslotionen auf wässriger, alkoholischer oder glycolischer Basis, Seife, Syndets, Hautpflegemittel, Creme, Lotion, Milch, Emulsionsschaum, Mikro-, oder Nanoemulsion, Paste, Gel (z.B. Hydro- oder Hydrodispersionsgel), Balsam, Serum, Roll-On, Pumpspray, Aerosol (schäumend, nicht schäumend oder nach-schäumend), Hautpflegemittel, Fußpflegemittel (inklusive Keratolytika, Desodorantien), Insekten abwehrendes Mittel, Sonnenschutzmittel, Aftersun-Präparat, Rasiermittel, Haarentfernungsmittel, Haarpflegemittel wie z.B. Shampoo, 2-in-1 Shampoo, Anti-Schuppen-Shampoo, Babyshampoo, Shampoo für trockene Kopfhaut, Shampoo Konzentrat, Conditioner, Haarkur, Haarwasser, Haarspülung, Frisiercrème, Dauerwell- und Fixierungsmittel, Haarglättungsmittel (Entkräuselungsmittel, Relaxer), Haarfestiger (Spray), Styling-Aid (z.B. Gel), als Blondiermittel, Haaraufheller, Haarconditioner, Haarmousse, Haartönung, Deodorant und/oder Antitranspirant; Mundwasser und Munddusche, Aftershave Balsam, Pre- und Aftershave Lotion, Augenpflege, Make-Up, Make-Up Entferner, Babyartikel, Badeartikel (z.B. Kapsel), oder Maske.

Unter Mundhygieneprodukten werden in der vorliegenden Erfindung die dem Fachmann geläufigen Formulierungen zur Reinigung und Pflege der Mundhöhle und des Rachenraumes sowie zur Erfrischung des Atems verstanden. Bekannte und gebräuchliche mundhygienische Formulierungen sind sowohl Cremes, Gele, Pasten, Schäume, Emulsionen, Suspensionen, Aerosole, Sprays als auch Kapseln, Granulate, Pastillen, Tabletten, Bonbons oder Kaugummis, ohne dass diese Aufzählung an Darreichungsformen bzgl. der Einsatzmöglichkeiten limitierend ist. Solche Formulierungen dienen dazu, Zahnsubstanz und Mundhöhle zu reinigen und zu pflegen sowie den Atem zu erfrischen.

Erfindungsgemäße Mundhygieneprodukte werden bevorzugt ausgewählt aus der Gruppe bestehend aus: Zahncremes, Zahnpasten, Zahngele, Mundwässer, Mundspülungen, Flüssigkeiten zum Gurgeln, Mund- oder Rachensprays (Pump- oder Aerosolspray), Lutschpastillen, Lutschtabletten, Bonbons, Kaugummis, Kaubonbons und zahnpflegende Kaugummis.

Weiter bevorzugt werden Mundhygieneprodukte ausgewählt aus der Gruppe bestehend aus Zahncremes, Zahnpasten, Zahngele, Mund- oder Rachensprays (Pump- oder Aerosolspray), Lutschpastillen, Lutschtabletten, Bonbons, Kaugummis, Kaubonbons und zahnpflegende Kaugummis.

Zahnpflegemittel (als Beispiel für der Mundpflege dienende erfindungsgemäße Zubereitungen) umfassen im Allgemeinen ein abrasives System (Schleif- oder Poliermittel), wie z.B. Kieselsäuren, Calciumcarbonate, Calciumphosphate, Aluminiumoxide und/oder Hydroxylapatite, oberflächenaktive Substanzen wie z.B. Natriumlaurylsulfat, Natriumlaurylsarcosinat und/oder Cocamidopropylbetain, Feuchthaltemitteln wie z.B. Glycerin und/oder Sorbit, Verdickungsmittel, wie z.B. Carboxymethylcellulose, Polyethylenglycole, Carrageenan und/oder Laponite^{®}, Süßstoffe, wie z.B. Saccharin, Geschmackskorrigenzien für unangenehme Geschmackseindrücke, Geschmackskorrigenzien für weitere, in der Regel nicht unangenehme Geschmackseindrücke, geschmacksmodulierende Stoffe (z.B. Inositolphosphat, Nucleotide wie Guanosinmonophosphat, Adenosinmonophosphat oder andere Stoffe wie Natriumglutamat oder 2-Phenoxypropionsäure), Kühlwirkstoffe wie z.B. Mentholderivate (z.B. L-Menthyllactat, L-Menthylalkylcarbonate, Menthonketale, Menthancarbonsäureamide), 2,2,2-Trialkylessigsäureamide (z.B. 2,2-Diisopropylpropionsäuremethylamid), Icilin und Icilin-Derivate, Stabilisatoren und aktive Wirkstoffe, wie z.B. Natriumfluorid, Natriummonofluorphosphat, Zinndifluorid, quartären Ammoniumfluoriden, Zinkcitrat, Zinksulfat, Zinnpyrophosphat, Zinndichlorid, Mischungen verschiedener Pyrophosphate, Triclosan, Cetylpyridiniumchlorid, Aluminiumlactat, Kaliumcitrat, Kaliumnitrat, Kaliumchlorid, Strontiumchlorid, Wasserstoffperoxid, Aromen und/oder Natriumbicarbonat oder Geruchskorrigentien.

Der Gesamtanteil an den im Rahmen des erfindungsgemäßen Verfahrens gewonnen Geruchs- und/oder Geschmacksstoffen / Aromen / Kombinationen davon in einem erfindungsgemäßen Mundhygieneprodukt liegt, je nach Produkttyp, regelmäßig im Bereich von 0,001 bis 10000 ppm, bevorzugt im Bereich von 0,1 bis 1000 ppm.

Produkte im Sinne der vorliegenden Erfindung, bevorzugt pharmazeutische Produkte, können auch in Form von Kapseln, Tabletten (nicht-überzogene sowie überzogene Tabletten, bspw. Mit magensaftresistenten Überzügen), Dragees, Granulate, Pellets, Feststoffmischungen, Dispersionen in flüssigen Phasen, als Emulsionen, als Pulver, als Lösungen, als Pasten oder als andere schluck- oder kaubare Zubereitungen oder als Nahrungsergänzungsmittel vorliegen.

Als weitere Bestandteile für die erfindungsgemäßen Produkte, insbesondere Nahrungsmittel, Genussmittel, Getränke, Halbfertigwaren, Mundhygiene-, kosmetische oder pharmazeutische Produkte, werden übliche Grund-, Hilfs- und/oder Zusatzstoffe verwendet. Vorzugsweise werden diese weiteren Bestandteile ausgewählt aus der Gruppe, bestehend aus Wasser, Gemische frischer oder prozessierter, pflanzlicher oder tierischer Grund- oder Rohstoffe, verdauliche oder nicht-verdauliche Kohlenhydrate (bspw. Saccharose, Maltose, Fruktose, Glukose, Dextrine, Amylose, Amylopektin, Inulin, Xylane, Cellulose), Zuckeralkohole (bspw. Sorbit, Mannitol, Xylitol), natürliche oder gehärtete Fette (bspw. Talg, Schmalz, Palmfett, Kokosfett, gehärtetes Pflanzenfett), fette Öle (bspw. Sonnenblumenöl, Erdnussöl, Maiskeimöl, Distelöl, Olivenöl, Walnussöl, Fischöl, Sojaöl, Sesamöl), Fettsäuren oder deren Salze (bspw. Kaliumstearat, Kaliumpalmitat), proteinogene oder nicht-proteinogene Aminosäuren und verwandte Verbindungen (bspw. Taurin, Creatin, Creatinin), Peptide, native oder prozessierte Proteine (bspw. Gelatine), Enzyme (bspw. Peptidasen, Glucosidasen, Lipasen, Proteinasen), Nukleinsäuren, Nukleotide (Inositolphosphat), geschmacksmodulierende Stoffe (bspw. Natriumglutamat, 2-Phenoxypropionsäure), Emulgatoren (bspw. Lecitine, Diacylglycerole), Stabilisatoren (bspw. Carrageenan, Alginat, Johannisbrotkernmehl, Guarkernmehl), Konservierungsstoffe (bspw. Benzoesäure, Sorbinsäure), Antioxidantien (bspw. Tocopherol, Ascorbinsäure), Gelatoren (bspw. Zitronensäure), organische oder anorganische Säuerungsmittel (Äpfelsäure, Essigsäure, Zitronensäure, Weinsäure, Phosphorsäure), Bitterstoffe (bspw. Chinin, Koffein, Limonin), Süßstoffe (bspw. Saccharin, Cyclamat, Aspartam, Neotam, Neohesperidindihydrochalcon), mineralische Salze (bspw. Natriumchlorid, Kaliumchlorid, Magnesiumchlorid, Natriumphosphate), die enzymatische Bräunung verhindernde Stoffe (bspw. Sulfit, Ascorbinsäure), ätherische Öle, Pflanzenextrakte, natürliche oder synthetische Farbstoffe oder Farbpigmente (bspw. Carotinoide, Flavonoide, Antocyane, Chlorophyll und deren Derivate, Gewürze sowie Riechstoffe, synthetische, natürliche oder naturidentische Geschmacks- und/oder Duftstoffe.

Die erfindungsgemäßen Produkte, insbesondere Nahrungsmittel, Genussmittel, Getränke, Halbfertigwaren, Mundhygiene-, kosmetische oder pharmazeutische Produkte, bevorzugt Mundhygieneprodukte, umfassen bevorzugt ein oder mehrere Grund-, Hilfs- und/oder Zusatzstoffe aus folgender Gruppe: Konservierungsmittel, Abrasiva, weitere antibakterielle Mittel, entzündungshemmende Mittel, irritationsverhindernde Mittel, irritationshemmende Mittel, weitere antimikrobielle Mittel, Antioxidantien, Adstringentien, Antistatika, Binder, (mineralische) Füllstoffe, Puffer, Trägermaterialien, Chelatoren (Chelatbildner), reinigende Mittel, pflegende Mittel, oberflächenaktive Substanzen, deodorierende Mittel, Emulgatoren, Enzyme, Fasern, Filmbildner (filmbildende Substanzen), Fixateure, Schaumbildner, Substanzen zum Verhindern des Schäumens, Schaumstabilisatoren, Schaumbooster, gelierende Mittel, gelbildende Mittel, feuchtigkeitsspendende Mittel (Moisturizer), anfeuchtende Substanzen, feuchthaltende Substanzen, bleichende Mittel, aufhellende Mittel (z.B. Wasserstoffperoxid), imprägnierende Mittel, reibungsverringernde Mittel, Gleitmittel, geruchs- und/oder geschmacksmodulierende Mittel, geruchs- und/oder geschmacksreduzierende Mittel, geruchs- und/oder geschmacksverstärkende Mittel, Trübungsmittel, plastifizierende Mittel, deckfähige Mittel, Glanzmittel, Silikone, (schleim)hautkühlende Mittel (Kühlwirkstoffe), (schleim)hautberuhigende Mittel, (schleim)hautreinigende Mittel, (schleim)hautpflegende Mittel, (schleim)hautheilende Mittel, schleimhaut-schützende Mittel, UV-Filter, Stabilisatoren, suspendierende Mittel, Vitamine, fette Öle, Wachse, Fette, Phospholipide, gesättigte Fettsäuren, ein- oder mehrfach ungesättigte Fettsäuren, alpha-Hydroxysäuren, Polyhydroxysäuren, Verflüssiger, Farbstoffe, farbschützende Mittel, Pigmente, Tenside, Elektrolyte, Silikonderivate, Polyole, organische Lösungsmittel, Kieselsäuren, Calciumcarbonat, Calciumhydrogenphosphat, Aluminiumoxid, Fluoride, Zink-, Zinn-, Kalium-, Natrium- und Strontiumsalze, Pyrophosphate, Hydroxyapatite.

Sofern die erfindungsgemäße Produktzubereitung eine Lösung oder Lotion darstellt, können bspw. als Lösungsmittel verwendet werden: Wasser oder wässrige Lösungen, Öle, wie Triglyceride der Caprin- oder der Caprylsäure oder auch Alkohole, Diole oder Polyole niedriger C-Zahl, bspw. lineare C₃- bis C₈-Polyole, sowie deren Ether, vorzugsweise Ethanol, Isopropanol, Propylenglykol, Glycerin, Ethylenglykol. Insbesondere werden Gemische der vorstehend genannten Lösungsmittel verwendet.

Erfindungsgemäße Produktzubereitungen, bevorzugt solche, die für den Einsatz als Zahn- und/oder Mundpflegeprodukt vorgesehen sind, sind bevorzugt frei von kariogenen Substanzen, insbesondere frei von Saccharose, Glucose, Lactose, hydrolisierter Lactose, Sorbose, Arabinose, Xylose, Mannose, Maltose, Galactose, Maltotriose und/oder Fructose.

In einer weiteren bevorzugten Ausgestaltung umfassen die erfindungsgemäßen Produkte, insbesondere Nahrungsmittel, Genussmittel, Getränke, Halbfertigwaren, Mundhygiene-, kosmetische oder pharmazeutische Produkte, weitere Geschmacks- und/oder Duftstoffe.

Diese weiteren Geschmacks- und/oder Duftstoffe umfassen bspw. unter anderem (schleimhaut)kühlende Mittel, (schleimhaut)wärmende Mittel, scharf schmeckende Stoffe, Süßstoffe, Zuckeraustauschstoffe, organische oder anorganische Säuerungsmittel (z.B. Äpfelsäure, Essigsäure, Citronensäure, Weinsäure, Phosphorsäure), Bitterstoffe (z.B. Chinin, Coffein, Limonin, Amarogentin, Humolone, Lupolone, Catechine, Tannine), und verzehrbare mineralische Salze (z.B. Natriumchlorid, Kaliumchlorid, Magnesiumchlorid, Natriumphosphate).

Geeignete Zuckeraustauschstoffe, die Bestandteil der erfindungsgemäßen Zubereitungen sein können, sind Zuckeralkohole wie bspw. Mannit, Sorbit und Sorbitsirup, Isomalt (z.B. Palatinit^{®}), Maltit und Maltitsirup, Lactit, Xylit, Erythrit, Leucrose, Arabinol, Arabitol, Adonitol, Alditol, Ducitol, Iditol, aber auch Fructooligosaccharide (z.B. Raftilose^{®}), Oligofructose oder Polydextrose.

Als typische Süßstoffe, die Bestandteil der erfindungsgemäßen Produkte sein können, seien Saccharin (gegebenenfalls als Na-, K- oder Ca-Salz), Aspartam (z.B. NutraSweet^{®}) Cyclamat (gegebenenfalls als Na- oder Ca-Salz), Acesulfam-K (z.B. Sunett^{®}), Thaumatin oder Neohesperidin-Dihydrochalkon genannt. Ferner können auch andere Süßstoffe wie Steviosid, Rebaudiosid A, Glycyrrhizin, Ultrasüß, Osladin, Brazzein, Miraculin, Pentadin, Phyllodulcin, Dihydrochalcone, Arylharnstoffe, trisubstituierte Guanidine, Glycyrrhizin, Superaspartam, Suosan, Sucralose (Trichlorgalactosaccarose, TGS), Alitam, Monellin oder Neotame^{®} verwendet werden.

Bevorzugte scharf schmeckende und/oder den Speichelfluss im Mund anregende Substanzen und/oder ein Gefühl von Wärme und/oder ein kribbelndes Gefühl auf der Haut oder auf den Schleimhäuten hervorrufende Substanzen, die Bestandteil der erfindungsgemäßen Produkte sein können, sind z.B.: Capsaicin, Dihydrocapsaicin, Gingerole, Paradole, Shogaole, Piperin, Carbonsäure-N-vanillylamide, insbesondere Nonansäure-N-vanillylamid, Pellitorin oder Spilanthol, 2-Nonensäureamide, insbesondere 2-Nonensäure-N-isobutylamid, 2-Nonensäure-N-4-hydroxy-3-methoxyphenylamid, Alkylether von 4-Hydroxy-3-methoxybenzylalkohol, insbesondere 4-Hydroxy-3-methoxybenzyl-n-butylether, Alkylethervon 4-Acyloxy-3-methoxybenzylalkohol, insbesondere 4-Acetyloxy-3-methoxybenzyl-n-butylether und 4-Acetyloxy-3-methoxybenzyl-n-hexylether, Alkylether von 3-Hydroxy-4-methoxybenzylalkohol, Alkylether von 3,4-Dimethoxybenzylalkohol, Alkylether von 3-Ethoxy-4-hydroxybenzylalkohol, Alkylether von 3,4-Methylendioxybenzylalkohol, (4-Hydroxy-3-methoxyphenyl)essigsäureamide, insbesondere (4-Hydroxy-3-methoxyphenyl)essigsäure-N-n-octylamid, Vanillomandelsäurealkylamide, Ferulasäurephenethylamid, Nicotinaldehyd, Methylnicotinat, Propylnicotinat, 2-Butoxyethylnicotinat, Benzylnicotinat, 1-Acetoxychavicol, Polygodial und Isodrimeninol, weiter bevorzugt cis- und/oder trans-Pellitorin gemäß der WO 2004/000787 bzw. WO 2004/043906, Alkencarbonsäure-N-alkylamide gemäß der WO 2005/044778, Mandelsäurealkylamide gemäß der WO 03/106404 oder Alkyloxyalkansäureamide gemäß der WO 2006/003210.

Bevorzugte scharf schmeckende und/oder ein Gefühl von Wärme und/oder ein kribbelndes Gefühl auf der Haut oder auf den Schleimhäuten hervorrufende natürliche Extrakte, die Bestandteil der erfindungsgemäßen Produkte sein können, sind z.B.: Extrakte aus Paprika, Extrakte aus Pfeffer (z.B. Capsicum Extrakt), Extrakte aus Chili-Pfeffer, Extrakte aus Ingwerwurzeln, Extrakte aus Aframomum melgueta, Extrakte aus Spilanthes acmella, Extrakte aus Kaempferia galanga oder Extrakte aus Alpinia galanga.

Bevorzugte Stoffe zur Maskierung eines oder mehrerer unangenehmer Geschmackseindrücke, insbesondere eines bitteren, adstringierenden und/oder metallischen Geschmackseindrucks oder Nachgeschmacks, die Bestandteil der erfindungsgemäßen Produkte sein können, sind: Lactisol (20-(4-Methoxyphenyl)milchsäure) (vgl. US 5,045,336), 2,4-Dihydroxybenzoesäure-Kaliumsalz (vgl. US 5,643,941), Ingwerextrakten (vgl. GB 2,380,936), Neohesperidindihydrochalcon (vgl. Manufacturing Chemist 2000, Juli-Heft, S. 16-17), bestimmte Flavone (2-Phenylchrom-2-en-4-one) (vgl. US 5,580,545), bestimmte Nucleotide, wie bspw. Cytidin-5'-monophosphate (CMP) (vgl. US 2002/0177576), bestimmte Natriumsalze wie Natriumchlorid, Natriumcitrat, Natriumacetat und Natriumlactat (vgl. Nature, 1997, Bd. 387, S. 563), ein Lipoprotein aus 13-Lactoglobulin und Phosphatidinsäure (vgl. EP 635 218), Neodiosmin (5,7-Dihydroxy-2-(4-methoxy-3-hydroxyphenyl)-7-O-neohesperidosyl-chrom-2-en-4-on) (vgl. US 4,154,862), vorzugsweise Hydroxyflavanone gemäß EP 1 258 200, dabei wiederum bevorzugt 2-(4-Hydroxyphenyl)-5,7-dihydroxychroman-4-on (Naringenin), 2-(3,4-Dihydroxyphenyl)-5,7-dihydroxychroman-4-on (Eriodictyol), 2-(3,4-Dihydroxyphenyl)-5-hydroxy-7-methoxy-chroman-4-on (Eriodictyol-7-methylether), 2-(3,4-Dihydroxyphenyl)-7-hydroxy-5-methoxychroman-4-on (Eriodictyol-5-methylether) und 2-(4-Hydroxy-3-methoxyphenyl)-5,7-dihydroxychroman-4-on (Homoeriodictyol), deren (28)- oder (2R)-Enantiomere oder Gemische derselben sowie deren ein- oder mehrwertigen Phenolatsalze mit Na⁺, K⁺, NH₄⁺, Ca²⁺, Mg²⁺ oder Al³⁺ als Gegenkationen, oder gamma-Aminobuttersäure (4-Aminobutansäure, als neutrale Form ("inneres Salz") oder in der Carboxylat- oder Ammoniumform) gemäß der WO 2005/096841.

Stoffe, die bitter, adstringierend, pappig, staubig, trocken, mehlig, ranzig oder metallisch schmecken, sind bspw. Xanthinalkaloide, Xanthine (Coffein, Theobromin, Theophyllin), Alkaloide (Chinin, Brucin, Nicotin), phenolische Glycoside (z.B. Salicin, Arbutin), Flavonoidglycoside (z.B. Hesperidin, Naringin), Chalcone und Chalconglycoside, hydrolisierbare Tannine (Gallus- oder Elagsäureestervon Kohlenhydraten, z.B. Pentagalloylglucose), nichthydrolysierbare Tannine (ggfs. galloylierte Catechine oder Epicatechine und deren Oligomere, z.B. Proanthyocyanidine oder Procyanidine, Thearubigenin), Flavone (z.B. Quercetin, Taxifolin, Myricetin), andere Polyphenole (gamma-Oryzanol, Kaffeesäure oder deren Ester), terpenoide Bitterstoffe (z.B. Limonoide wie Limonin oder Nomilin aus Zitrusfrüchten, Lupolone und Humolone aus Hopfen, Iridoide, Secoiridoide), Absinthin aus Wermut, Amarogentin aus Enzian, metallische Salze (Kaliumchlorid, Natriumsulfat, Magnesiumsulfat), bestimmte pharmazeutische Wirkstoffe (z.B. Fluorchinolon-Antibiotika, Paracetamol, Aspirin, beta-Lactam-Antibiotika, Ambroxol, Propylthiouracil, Guaifenesin), bestimmte Vitamine (bspw. Vitamin H, Vitamine aus der B-Reihe wie Vitamin B1, B2, B6, B12, Niacin, Panthotensäure), Denatoniumbenzoat, Sucraloseoctaacetat, Kaliumchlorid, Magnesiumsalze, Eisensalze, Aluminiumsalze, Zinksalze, Harnstoff, ungesättigte Fettsäuren, insbesondere ungesättigte Fettsäuren in Emulsionen, Aminosäuren (z.B. Leucin, Isoleucin, Valin, Tryptophan, Prolin, Histidin, Tyrosin, Lysin und Phenylalanin), Peptide (insbesondere Peptide mit einer Aminosäure aus der Gruppe bestehend aus Leucin, Isoleucin, Valin, Tryptophan, Prolin oder Phenylalanin am N- oder C-Terminus).

Stoffe, die einen bitteren, adstringierenden, pappigen, staubigen, trockenen, mehligen, ranzigen oder metallischen Nachgeschmack haben, können bspw. zur Gruppe der Süßstoffe oder der Zuckeraustauschstoffe gehören. Beispielhafte Verbindungen sind Aspartam, Neotam, Superaspartam, Saccharin, Sucralose, Tagatose, Monellin, Stevioside, Thaumatin, Miraculin, Glycyrrhizin und deren Derivate, Cyclamat und die pharmazeutisch akzeptablen Salze der vorstehend genannten Verbindungen. Vorteilhafte Zusatzstoffe zur Einarbeitung in die erfindungsgemäßen Produkte sind Emulgatoren (z.B. Lecithine, Diacylglycerole, Gummi arabicum), Stabilisatoren (z.B. Carageenan, Alginat), Konservierungsstoffe (z.B. Benzoesäure, Sorbinsäure), Antioxidantien (z.B. Tocopherol, Ascorbinsäure), Chelatoren (z.B. Citronensäure), Pflanzenextrakte, natürliche oder synthetische Farbstoffe oder Farbpigmente (z.B. Carotinoide, Flavonoide, Anthocyane, Chlorophyll und deren Derivate).

Erfindungsgemäße Produkte, insbesondere Nahrungsmittel, Genussmittel, Getränke, Halbfertigwaren, Mundhygiene-, kosmetische oder pharmazeutische Produkte, können ferner Antioxidantien enthalten bzw. Stoffe, die eine antioxidative Wirkung verstärken können, vorzugsweise natürlich vorkommende Tocopherole und deren Derivate (z.B. Vitamin E-acetat), Vitamin C und ihre Salze bzw. Derivate (z.B. Ascorbylpalmitat, Mg-Ascorbylphosphat, Ascorbylacetat), Vitamin A und Derivate (Vitamin A-palmitat), Tocotrienole, Flavonoide, alpha-Hydroxysäuren (z.B. Citronensäure, Milchsäure, Apfelsäure, Weinsäure) und deren Na-, Ka- und Ca-Salze, Flavonoide, Quercetin, phenolische Benzylamine, Propylgallat, Octylgallat, Dodecylgallat, Butylhydroxyanisol (BHA, E320), Butylhydroxytoluol (BHT, 2,6-Di-tert.-butyl-4-methyl-phenol, E321), Lecithine, Mono- und Diglyceride von Speisefettsäuren verestert mit Citronensäure, Carotinoide, Carotine (z.B. alpha-Carotin, beta-Carotin, Lycopin) und deren Derivate, Phytinsäure, Lactoferrin, EDTA, EGTA, Folsäure und deren Derivate, Ubichinon und Ubichinol und deren Derivate, Ferulasäure und deren Derivate, Zink und dessen Derivate bzw. Verbindungen (z.B. ZnO, ZnSO₄), Selen und dessen Derivate bzw. Verbindungen (z.B. Selenmethionin), Orthophosphate und Na-, Ka- und Ca-Salze der Monophosphorsäure sowie aus Pflanzen isolierte Inhaltsstoffe, Extrakte bzw. Fraktionen davon z.B. aus Tee, Grüntee, Algen, Traubenkernen, Weizenkeimen, Kamille, Rosmarin, Oregano.

Bevorzugte Kühlwirkstoffe sind: L-Menthol, D-Menthol, racemisches Menthol, Menthonglycerinacetal (Handelsname: Frescolat^{®}MGA), Menthyllactat (Handelsname: Frescolat^{®}ML, vorzugsweise handelt es sich bei Menthyllactat und L-Menthyllactat, insbesondere L-Menthyl-L-lactat), substituierte Menthyl-3-caibonsäureamide (z.B. Menthyl-3-carbon-säure-N-ethylamid), 2-Isopropyl-N-2,3-trimethylbutanamid, substituierte Cyclohexancarbonsäureamide, 3-Menthoxy-propan-1,2-diol, 2-Hydroxyethylmenthylcarbonat, 2-Hydroxypropylmenthylcarbonat, N-Acetylglycinmenthylester, Isopulegol, Menthylhydroxycarbonsäureester (z.B. Menthyl-3-hydroxybutyrat), Monomenthylsuccinat, 2-Mercaptocyclodecanon, Menthyl-2-pyrrolidin-5-oncarboxylat, 2,3-Dihydroxy-p-menthan, 3,3,5-trimethylcyclohexanonglycerinketal, 3-Menthyl-3,6-di- und -trioxaalkanoate, 3-Menthyl methoxyacetat, und Icilin.

Besonders bevorzugte Kühlwirkstoffe sind: 1-Menthol, racemisches Menthol, Menthonglycerinacetal (Handelsname: Frescolat^{®}MGA), Menthyllactat (vorzugsweise I-Menthyllactat, insbesondere L-Menthyl-L-lactat, Handelsname: Frescolat^{®}ML), 3-Menthoxy-propan-1,2-diol, 2-Hydroxyethylmenthylcarbonat, 2-Hydroxypropylmenthylcarbonat.

Die Einsatzkonzentration der einzusetzenden Kühlwirkstoffe liegt je nach Substanz vorzugsweise im Konzentrationsbereich von 0,01 bis 20 Massen-% und bevorzugt im Konzentrationsbereich von 0,1 bis 5 Massen-%, bezogen auf die Gesamtmasse der fertigen (anwendungsbereiten) erfindungsgemäßen Produkte.

Die erfindungsgemäßen Produkte können bspw. folgende Farbstoffe, Färbemittel oder Pigmente enthalten: Lactoflavin (Riboflavin), beta-Carotin, Riboflavin-5'-phosphat, alpha-Carotin, gamma-Carotin, Cantaxanthin, Erythrosin, Kurkumin, Chinolingelb, Gelborange S, Tartrazin, Bixin, Norbixin (Annatto, Orlean), Capsanthin, Capsorubin, Lycopin, beta-Apo-8'-Carotinal, beta-Apo-8'-Carotinsäureethylester, Xantophylle (Flavoxanthin, Lutein, Kryptoxanthin, Rubixanthin, Violaxanthin, Rodoxanthin), Echtes Karmin (Karminsäure, Cochenille), Azorubin, Cochenillerot A (Ponceau 4 R), Beetenrot, Betanin, Anthocyane, Amaranth, Patentblau V, Indigotin I (Indigo-Karmin), Chlorophylle, Kupferverbindungen der Chlorophylle, Brillantsäuregrün BS (Lisamingrün), Brillantschwarz BN, Carbo medicinalis vegetabilis, Titandioxid, Eisenoxide und -hydroxide, Calciumcarbonat, Aluminium, Silber, Gold, Rubinpigment BK (Litholrubin BK), Methylviolett B, Viktoriablau R, Viktoriablau B, Acilanbrillantblau FFR (Brillantwollblau FFR), Naphtolgrün B, Acilanechtgrün 10 G (Alkaliechtgrün 10 G), Ceresgelb GRN, Sudanblau II, Ultramarin, Phtalocyaninblau, Phtalocayaningrün, Echtsäureviolett R. Es können weitere, natürlich gewonnene Extrakte (z.B. Paprikaextrakt, Schwarzmöhrenextrakt, Rotkohlextrakt) zu Färbezwecken verwendet werden. Gute Ergebnisse wurden auch erzielt mit den im Folgenden genannten Farben, den sogenannten Aluminium Lakes: FD & C Yellow5 Lake, FD & C Blue 2 Lake, FD & C Blue 1 Lake, Tartrazine Lake, Quinoline Yellow Lake, FD & C Yellow 6 Lake, FD & C Red 40 Lake, Sunset Yellow Lake, Carmoisine Lake, Amaranth Lake, Ponceau 4R Lake, Erythrosyne Lake, Red 2G Lake, Allura Red Lake, Patent Blue V Lake, Indigo Carmine Lake, Brilliant Blue Lake, Brown HT Lake, Black PN Lake, Green S Lake und deren Mischungen.

Geeignete (mineralische) Füllstoffe zur Einarbeitung in die erfindungsgemäßen Produkte sind bspw. Calciumcarbonat, Titandioxid, Siliciumdioxid, Talkum, Aluminiumoxid, Dicalciumphosphat, Tricalciumphosphat, Magnesiumhydroxid und deren Mischungen.

Die weiteren üblichen Grund-, Hilfs- und/oder Zusatzstoffe für erfindungsgemäße Produkte können in der Regel in Mengen von 0,00001 bis 99,9 Massen-%, vorzugsweise 10 bis 80 Massen-%, bezogen auf das Gesamtgewicht der Produktzubereitung, enthalten sein. Ferner können die Zubereitungen bzw. Produkte Wasser oder andere Lösungsmittel in einer Menge bis zu 99,9 Massen-%, vorzugsweise 5 bis 80 Massen-%, bezogen auf das Gesamtgewicht der Produktzubereitung, aufweisen.

Gemäß einer weiteren bevorzugten Ausführungsform sind in den Produkten enthaltene Geschmacks- und/oder Duftstoffe vor deren Verwendung bei der Herstellung der erfindungsgemäßen Produkte zunächst in eine hierfür geeignete Matrix (Trägerstoff) eingearbeitet, z.B. in Form von Emulsionen, Liposomen, z.B. ausgehend von Phosphatidylcholin, Microsphären, Nanosphären oder auch in Kapseln, Granulaten oder Extrudaten. Besonders bevorzugt wird die Matrix dabei jeweils so gewählt, dass die Geschmack- und/oder Duftstoffe verzögert von der Matrix freigegeben werden, so dass eine langanhaltende Wirkung erzielt wird.

Bevorzugte Matrices, in welche die Geschmacks- und/oder Duftstoffe vor deren Verwendung eingearbeitet werden, umfassen dabei vorzugsweise ein oder mehrere Materialien ausgewählt aus der folgenden Gruppe: Kohlenhydratpolymere (Polysaccharide) (z.B. Stärke, Stärkederivate, Cellulose oder Cellulosederivate (z.B. Hydroxypropylcellulose), Alginate, Gellan Gum, Agaroder Carragheen), natürliche Fette, natürliche Wachse (z.B. Bienenwachs, Carnaubawachs), Proteine, z.B. Gelatine, Komplexbildner (z.B. Cyclodextrine oder Cyclodextrinderivate, bevorzugt beta-Cyclodextrin).

Es hat sich ferner als vorteilhaft erwiesen, Geschmacks- und/oder Duftstoffe vor deren Verwendung bei der Herstellung der erfindungsgemäßen Produkte in eine sprühgetrocknete Form zu überführen. Als Matrices für die einzusetzenden Geschmacks- und/oder Duftstoffe in sprühgetrockneter Form können Einzelsubstanzen bzw. Substanzgemische eingesetzt werden. Vorteilhafte Trägerstoffe sind Kohlenhydrate und/oder Kohlenhydratpolymere (Polysaccharide). Als bevorzugte Trägerstoffe sind zu nennen: Hydrokolloide wie Stärken, abgebaute Stärken, chemisch oder physikalisch modifizierte Stärken, modifizierte Cellulosen, Gummi Arabicum, Ghatti-Gummi, Traganth, Karaya, Carrageenan, Guarkernmehl, Johannisbrotkernmehl, Alginate (z.B. Na-Alginat), Pektin, Inulin oder Xanthan Gum zu nennen. Bevorzugte Trägerstoffe sind Maltodextrine sowie Mischungen von Maltodextrinen und Gummi Arabicum, wobei jeweils Maltodextrine mit DE-Werten im Bereich 15 bis 20 wiederum vorteilhaft sind. Der Zersetzungsgrad der Stärke wird mit der Kennzahl "Dextrose-Equivalent" (DE) gemessen, welche die Grenzwerte 0 für das langkettige Glucosepolymer und 100 für die reine Glucose annehmen kann. Die Einkapselung mittels Sprühtrocknung ist dem Fachmann bekannt, und bspw. in US 3,159,585, US 3,971 ,852, US 4,532,145 oder US 5,124,162 beschrieben. Sprühgetrocknete Aromen sind in verschiedenen Geschmacksrichtungen und Partikelgrößen kommerziell erhältlich.

Im Weiteren gelten für die erfindungsgemäßen Verwendungen der erfindungsgemäßen Konzentrate sowie für die erfindungsgemäßen alternativen Anreicherungsverfahren die bereits zu den erfindungsgemäßen Adsorptions- und/oder Desorptionsverfahren gemachten Angaben inklusive der bevorzugten Ausgestaltungen.

Im Rahmen der vorliegenden Erfindung erfolgt eine sensorische Bewertung bzw. ein Sensoriktest einer Probe vorzugsweise derart, dass eine Probe, üblicherweise 20 ml, einer mit Wasser verdünnten flüchten Fraktion durch eine geschulte Prüfperson in den Mund genommen wird, wobei die Probe gustatorisch und/oder retronasal auf sensorischen Eindrücke im Vergleich zu einer Referenzprobe bewertet wird. Als Referenzprobe kommt hierbei der Saft und/oder das Alkohol enthaltende Getränk als solcher bzw. solches und/oder alternativ ein Lebensmittel bzw. eine wässrige Lebensmittelzubereitung zum Einsatz. Sofern nicht anderweitig erwähnt, wird ein Sensoriktest einer bestimmten flüchtigen Fraktion von 3 oder 5 Prüfpersonen unabhängig durchgeführt. Dabei werden die Proben codiert, in randomisierter Folge und unter Ausschluss störender Einflüsse wie Farbe, Lärm und Fremdgerüche in einem Sensorikraum verkostet. Eine sensorische Übereinstimmung der Probe mit der Referenz erfordert eine entsprechende Bewertung aller am jeweiligen Test beteiligten Prüfpersonen.

Der Ausdruck "aufweisen" bzw. "aufweisend" bezeichnet im Rahmen der vorliegenden Erfindung eine offene Aufzählung und schließt neben den ausdrücklich genannten Bestandteilen bzw. Schritten andere Bestandteile bzw. Schritte nicht aus (entsprechendes gilt für "umfassen", "enthalten", etc.). Wenn im Rahmen der vorliegenden Erfindung eine Zusammensetzung unter Verwendung des Ausdrucks "aufweisen" bzw. "aufweisend" beschrieben ist, schließt dies ausdrücklich Zusammensetzungen ein, die aus den genannten Bestandteilen bestehen oder im Wesentlichen aus den genannten Bestandteilen bestehen.

Der Ausdruck "bestehen aus" bzw. "bestehend aus" bezeichnet im Rahmen der vorliegenden Erfindung eine geschlossene Aufzählung und schließt neben den ausdrücklich genannten Bestandteilen bzw. Schritten jegliche anderen Bestandteile bzw. Schritte aus.

Der Ausdruck "im Wesentlichen bestehen aus" bzw. "im Wesentlichen bestehend aus" bezeichnet im Rahmen der vorliegenden Erfindung eine teilweise geschlossene Aufzählung und bezeichnet Zusammensetzungen, die neben den genannten Bestandteilen nur noch solche weitere Bestandteile aufweisen, die den Charakter der Zusammensetzung nicht materiell verändern oder die in Mengen vorliegen, die den Charakter der Zusammensetzung nicht materiell verändern.

### Bevorzugte Ausführungsformen:

Eine bevorzugte Ausführungsform des erfindungsgemäßen Verfahrens ist ein Verfahren zur Gewinnung einer flüchtigen Fraktion aus einem Saft und/oder einem Alkohol enthaltenden Getränk, aufweisend oder bestehend aus folgenden Schritten:
(a) Destillation eines Stoffgemischs aus dem Saft und/oder dem Alkohol enthaltenden Getränk, wobei die Destillation durch eine Schleuderkegelkolonne erfolgt;
(b) in Kontakt Bringen des Stoffgemischs aus Schritt (a) mit einem Sorbens zum Erhalten eines beladenen Sorbens; und
(c) in Kontakt Bringen des beladenen Sorbens aus Schritt (b) mit einem liquiden Desorbens zum Erhalten der flüchtigen Fraktion, dadurch gekennzeichnet, dass gewünschte Inhaltsstoffe der flüchtigen Fraktion derart aufkonzentriert im Vergleich zu dem in Schritt (a) eingesetzten Saft und/oder dem Alkohol enthaltenden Getränk sind, dass ein Zusatz von 0,001 bis 0,1 Massen-% der flüchtigen Fraktion zu einer beliebigen Lebensmittelzubereitung einen wahrnehmbaren Geruchseindruck und/oder Geschmackseindruck bei einer Testperson erzeugt.

In einer bevorzugten Ausführungsform des erfindungsgemäßen Verfahrens wird die Schleuderkegelkolonnen- Destillation in Form einer Gegenstrom Destillation bei einem Druck von 1 bis 500 mbar durchgeführt.

In einer bevorzugten Ausführungsform des erfindungsgemäßen Verfahrens wird die Gegenstrom Destillation mit einem Gas durchgeführt, wobei das Gas ein Inertgas, vorzugsweise Stickstoff, ist.

In einer bevorzugten Ausführungsform des erfindungsgemäßen Verfahrens wird ein Stripverhältnis im Bereich von 1 : 1 bis 10 : 1 verwendet.

In einer bevorzugten Ausführungsform des erfindungsgemäßen Verfahrens weist die wässrige Lösung eine Temperatur im Bereich von 28 bis 70°C, vorzugsweise im Bereich von 30 bis 60°C, mehr bevorzugt im Bereich von 32 bis 50°C, auf.

In einer bevorzugten Ausführungsform des erfindungsgemäßen Verfahrens ist das liquide Desorbens ein alkoholfreies Lösungsmittel, vorzugsweise Wasser oder Wasserdampf.

In einer bevorzugten Ausführungsform des erfindungsgemäßen Verfahrens ist das Sorbens ein mit organischen Resten oberflächenmodifizierter poröser Feststoff, vorzugsweise ein Polystyrol.

In einer bevorzugten Ausführungsform des erfindungsgemäßen Verfahrens ist die Lebensmittelzubereitung der Saft und/oder das alkoholische Getränk.

In einer bevorzugten Ausführungsform des erfindungsgemäßen Verfahrens ist der Saft ein Saft ausgewählt aus der Gruppe bestehend aus Fruchtsaft, Beerensaft und Gemüsesaft ist, und/oder das alkoholische Getränk ausgewählt aus der Gruppe bestehend aus Wein, Fruchtwein, weinhaltigen Getränken, Bier und bierhaltigen Getränken, vorzugsweise wobei die Frucht und/oder die Beere des Safts ausgewählt ist aus der Gruppe bestehend aus Zitrusfrucht (Citrus aurantium), insbesondere Zitrone, Orange, Apfelsine, Mandarine, Clementine, Grapefruit, Pampelmuse, Limone, Limette, Kumquat, Tangor und Tangelo, Melone, Kiwi, Papaya, Avocado, Acerola, Bärentraube, Brombeere, Blaubeere, Boysenbeere, Kirsche, virginische Traubenkirsche, Moltebeere, rote und schwarze Johannisbeere, Dattel, Kratzbeere (Rubus caesius), Holunderbeere, Traube, Stachelbeere, Huckleberry, Loganbeere, Olallieberry, Maulbeere, Rosine, Plains Berry, Prairie Berry, Preiselbeere, Himbeere, Birne, Pracht-Himbeere (Rubus spectabilis), Sanddornfrucht, Schlehenfrucht, Erdbeere, Weiße Zimt-Himbeere (Rubus parviflorus), Bocksdornfrucht, Weinbeere, Heidelbeere, Apfel, Rhabarber, Passionsfrucht, Pflaume, bspw. Zwetschge, Mirabelle, Aprikose, Nektarine, Quitte, Kiwi, Sternfrucht, Litschie, Ananas, Guave, Papaya, Maracuja und Mango und Pfirsich, vorzugsweise wobei das Gemüse des Safts ausgewählt ist aus der Gruppe bestehend aus Möhre, Tomate, Gurke, Rettich, Rote Rübe, Sauerkraut, Sellerie und Spinat.

In einer bevorzugten Ausführungsform des erfindungsgemäßen Verfahrens weist die flüchtige Fraktion einen oder mehrere Aroma-, Geschmacks- und/oder Duftstoffe, vorzugsweise alle, der alkoholhaltigen Lebensmittelzubereitung auf.

In einer bevorzugten Ausführungsform des erfindungsgemäßen Verfahrens beträgt ein Verhältnis des in der flüchtigen Fraktion enthaltenen Ethanols zu der Summe an Aromastoffen 0,005 bis 1000, vorzugsweise 0,1 bis 20.

Eine bevorzugte flüchtige Fraktion gemäß der vorliegenden Erfindung ist erhältlich oder wird erhalten durch ein Verfahren wie hierin beschrieben.

Eine bevorzugte Verwendung gemäß der vorliegenden Erfindung betrifft eine Verwendung einer flüchtigen Fraktion wie hierin beschrieben in einem zum Verzehr geeigneten Produkt oder zur Herstellung eines zum Verzehr geeigneten Produkts, vorzugsweise einem Nahrungsmittel, Genussmittel, Getränk, einer Halbfertigware, einem Mundhygiene-, einem kosmetischen oder einem pharmazeutischen Produkt.

In einem bevorzugten zum Verzehr geeigneten Produkt, vorzugsweise Nahrungsmittel, Genussmittel, Getränk, Halbfertigware, Mundhygiene-, kosmetisches oder pharmazeutisches Produkt, umfassend eine Menge einer flüchtigen Fraktion wie hierin beschrieben, gemäß der vorliegenden Erfindung liegt vorzugsweise der Gesamtanteil der flüchtigen Fraktion und/oder der darin enthaltenen Geschmacks- und/oder Duftstoffe bezogen auf das Gesamtgewicht des zum Verzehr geeigneten Produkts im Bereich von 0,001 bis 5 Massen-%, bevorzugt im Bereich von 0,01 bis 1 Massen-%, besonders bevorzugt im Bereich von 0,1 bis 0,5 Massen-%.

Weitere Merkmale und Vorteile der Erfindung ergeben sich aus der nachfolgenden Beschreibung bevorzugter Ausführungsbeispiele.

### Beispiele

### 1. Destillation von Früchten durch eine Schleuderkegelkolonne

Die destillative Gewinnung/ Destillation einer aromatischen, wässrigen, bzw. wässrig-alkoholischen Lösung von Früchten in Wasser wird, wie in der DE 36 86 492 T2 dargelegt, durchgeführt. Die Schleuderkegelkolonne wird im Gegenstrom bei einem Vakuum von 80 bis 100 mbar gefahren. Dabei wird die wässrige Lösung auf 50-60 °C erwärmt und die Temperatur beigehalten. Das Strippverhältnis liegt bei etwa 5-6 bezüglich Rücklauf zu Abnahme. Die Verdampfungsgeschwindigkeit wird durch Erhöhung der Temperatur und Verringerung des Strippverhältnisses soweit erhöht, dass es zu keiner Verminderung der sensorischen Qualität kommt. Stickstoff wird als Inertgas zum Schutz der flüchtigen Fraktion vor unerwünschten Oxidationsreaktionen eingesetzt. Die Ausbeute des Destillats beträgt zwischen 1/100 und 1/200 des eingesetzten flüssigen Rohstoffs.

**Tabelle 1: Gewinnung von Destillaten aus Früchten mittels Schleuderkegelkolonnen-Destillation**

| Wasserphase (WP) | Menge [kg] | Konzentrat [kg] | Menge wertgebende Aromastoffe in der WP [mg/kg] | Sensorik bei 0,9 Massen-% Dosierung von WP |
|---|---|---|---|---|
| Williams Birne Püree | 100 | 1 | 470 | estrig, nach Birne, süß, reif, saftig |
| Weißer Pfirsich Püree | 200 | 1 | 170 | grün, estrig, pfirsich-artig, fruchtig, saftig |
| Orangensaft | 200 | 1 | 83 | blumig, nach Orange, frischstechend, saftig |
| Apfelpüree | 100 | 1 | 570 | grün, aldehydisch, fruchtig, schalig, saftig |

Tabelle 1 zeigt, dass durch die Verwendung einer Schleuderkegelkolonne dem Ausgangsrohstoff sensorisch identische Destillate gewonnen werden. Die Wasserphase wird dabei zur Verkostung auf die Ausgangskonzentration zurückverdünnt, d.h. eine Dosage von 0,9 Massen-% entspricht einer Aufkonzentrierung um Faktor 110. Im Allgemeinen beträgt das Destillat mengenmäßig 0,5 bzw. 1 Massen-% des Ausgangsrohstoffes, womit bereits eine Anreicherung der Aromastoffe erfolgt ist.

Allerdings ist die Konzentration der Aromastoffe zu gering und die Dosierung von bspw. 0,9 Massen-% im Lebensmittel zu hoch, um diese Destillate in Aromamischungen einzuarbeiten. Limitierend wirkt zudem die Menge an Gärhauptprodukten, die, ausgedrückt in der Menge Ethanol, zwischen 0,1 und 10 Vol.-% im Destillat gemäß Tabelle 2 bei einer Aufkonzentrierung um Faktor 100 beträgt.

**Tabelle 2: Ethanolgehalte von Pürees und Säften aus verschiedenen Früchten nach frischer Verarbeitung und Verarbeitung der Früchte nach einem Tag Lagerung**

| Fruchtsäfte, jeweils frisch gepresst | EtOH-Gehalt frisch nach Gewinnung [mg/kg] | EtOH-Gehalt nach 1 Tag Lagerung [mg/kg] | Gehalt wertgebe nder Aromastof fe nach 1 Tag Lagerung [mg/kg] | Verhältn is Ethanol/ Summe Aromastoffe V(E/A) [ ] | EtOH-Gehalt berechnet bei 100-facher Aufkonzentrie rung von gelagerter Ware |
|---|---|---|---|---|---|
| Orangensaft | 468 | 486 | 8,83 | 55 | 4,86 |
| Clementinensaft Sorte Clemenules | 229 | 246 | 6,16 | 40 | 2,46 |
| Erdbeersaft | <10 | 24 | 4,93 | 5 | 0,24 |
| Weißer Pfirsichsaft | 151 | 907 | 3,92 | 231 | 9,07 |
| Calanda Pfirsichsaft | 119 | 135 | 4,64 | 29 | 1,35 |

Die Lagerungsversuche mit den frisch gepressten Fruchtsäften in Tabelle 2 zeigen, dass bereits nach einem Tag Lagerung einer Frucht signifikante Mengen Ethanol vorhanden sind, die die Summe der wertgebenden Aromastoffe in ihrer Menge weit übersteigt. So ist das Verhältnis von Ethanol zur Summe wertgebender Aromastoffe > 1 (Tabelle 2). Der Betrag des Verhältnisses ist wesentlich von der Stabilität der Frucht und der Fruchtart abhängig. In der Praxis lagern Früchte nach maschineller Lese bis zur Verarbeitung häufig 24 Stunden, da die Ernte selbst, der Transport und die vielen Verarbeitungsstufen im industriellen Maßstab diese Zeit beanspruchen, weshalb die Bildung von Gärhauptprodukten unvermeidbar ist.

Zur Bestimmung der Menge wertgebender Aromastoffe wird ein alkoholischer Extrakt mit Lösungsmittel, bspw. Pentan, verdünnt und mittels Flüssiginjektion in ein Kaltaufgabesystem (CIS 4, Gerstel) direkt in einen Gaschromatographen (GC) überführt. Die Überführung der Probe vom Kaltaufgabesystem auf die Trennsäule erfolgt bei 40 °C mit einer Aufheizrate von 12 °C/s bis 180 °C (5 min isotherm).

Liegt eine wässrige Lösung, wie bspw. ein Püree vor, werden 100 mg der Probe mit einem Polydimethylsiloxan (PDMS) beschichteten Magnetrührstab (10 mm lang, 1 mm Schichtdicke) für 1 h ausgerührt. Der Magnetrührstab wird anschließend entfernt und im Anschluss bei 150 °C Grad mit einer Thermodesorptionseinheit auf dem GC ausgeheizt. Die flüchtigen Verbindungen werden dabei auf das chromatographische System (GC 7890B, Agilent) aufgebracht (Kapillarsäule mit WAX Beschichtung 30 m × 0,25 mm × 0,25 µm), dabei aufgetrennt (Temperaturprogramm von 40 °C mit 3 °C/min auf 230 °C, Heliumfluss von 2 ml/min) und massenspektrometrisch (MSD 5977B, Agilent) analysiert. Die MS-Transferline wurde auf 280 °C, die Ionenquelle auf 230 °C und der Quadrupol auf 150 °C geheizt. Die massenspektrometrische Detektion erfolgte im positiven El-Modus bei 70 eV im Full-scan-Modus (m/z 25-350). Die Datenaufnahme erfolgte mit der GC-MS Mass Hunter-Software (Agilent B07.05.2479) und die Datenauswertung mittels AMDIS (V 3.2.13.03.08).

Die Peakflächen werden anschließend in das Verhältnis zu 2-Nonanol, als bekanntem Standard/Vergleich gesetzt und unter Berücksichtigung von Responsefaktoren als Gehaltsangaben ausgegeben.

Zur Bestimmung des Alkoholgehalts werden 100 µl der zu untersuchenden Probe in einen 100 ml Messkolben vorgelegt und durch Zugabe von Wasser bis zum vorgesehen Füllstand (100 ml bei Raumtemperatur bzw. Standardbedingungen) verdünnt. Die Lösung wird mittels Hochleistungsflüssigkeitschromatographie (HPLC, Agilent 1100) analysiert. Die Trennung erfolgt auf einer LiChrospher 100 RP-8, 5 µm (250 mm x 4 mm) Säule bei einem Fluss von 0,9 ml/min, isokratisch mit Wasser als mobile Phase. Zur Detektion wird ein Brechungsindex-Detektor verwendet und Ethanol wird über externe Kalibrierung quantifiziert.

Durch die Destillation mit der Schleuderkegelkolonne wird die Konzentration der wertgebenden Aromastoffe von einstelligen mg/kg-Werte auf dreistellige mg/kg-Werte angehoben und wertgebende Aromastoffe angereichert. So zeigt das SCC Destillat des weißen Pfirsichs eine Konzentration wertgebender Aromastoffe von 170 mg/kg und einen Ethanolgehalt von 0,4 Massen-% und damit eine Verbesserung, d.h. im Sinne der vorliegenden Erfindung eine Erniedrigung des Verhältnisses von Ethanol (in mg) zu der Gesamtheit der Aromastoffe (V(E/A) Verhältnis) (in mg) von 24 auf 22.

### 2. Adsorptions-/Desorptionsverfahren

Das Destillat wird anschließend durch ein Adsorptions-/Desorptionsverfahren, bevorzugt ohne Verwendung von organischen Lösungsmitteln, weiter aufkonzentriert. Bei der adsorptiven Aufkonzentrierung von wässrigen Lösungen, wie sie in der EP 2 075 320 A1 beschrieben wird, wird die wässrige Lösung durch eine Schüttung eines mit organischen Resten oberflächen-modifizierten porösen Sorbens geleitet. Die Schüttung wird im Anschluss mit einer im Vergleich zur wässrigen Lösung geringen Menge eines organischen Lösungsmittels, vorzugsweise Ethanol, eluiert.

**Tabelle 3: Analyse von Aromakonzentraten durch sorptive Aufkonzentierung von Schleuderkegelkolonnen-Destillaten aus weißem Pfirsich (A) und Orangensaft (B)**

| (A) | Destillat [mg/kg] | Konzentrat [mg/kg] |
|---|---|---|
| Name | | |
| Hexanol | 81,0 | 17828 |
| 2-E-Hexenol | 44,6 | 7421 |
| 2-E-Hexenal | 20,0 | 5648 |
| 3-Z-Hexenol | 7,8 | 970 |
| Hexanal | 5,1 | 1001 |
| 3-E-Hexenol | 1,3 | 319 |
| Linalool | 1,2 | 223 |
| 1,3-Pentenol | 1,2 | 23 |
| Isoamylalkohol | 0,6 | 33 |
| 2-Z-Pentenol | 0,5 | 5 |
| gamma-Decalacton | 0,5 | 260 |
| 2-Z-Hexenol | 0,4 | 139 |
| 3-Z-Hexenylacetat | 0,4 | 91 |
| Isobutanol | 0,3 | 2 |
| Benzylalkohol | 0,3 | 46 |
| 2-E-Hexenylacetat | 0,2 | 63 |

| (B) | Destillat [mg/kg] | Konzentrat [mg/kg] |
|---|---|---|
| Name | | |
| Linalool | 29,2 | 8544 |
| Octanol | 8,2 | 2012 |
| Isoamylalkohol | 5,2 | 317 |
| Ethylbutyrat | 4,9 | 1225 |
| 4-Terpinenol | 4,9 | 1198 |
| alpha-Terpineol | 4,0 | 1027 |
| 2-E-Hexenal | 2,6 | 674 |
| Octanal | 2,5 | 725 |
| 3-Hydroxy-ethylhexanoate | 2,5 | 535 |
| 2-Methylbutanol | 2,4 | 90 |
| Hexanol | 2,4 | 396 |
| Ethylacetat | 2,1 | 91 |
| Hexanal | 1,7 | 576 |
| 3-Z-Hexenol | 1,2 | 156 |
| Isobutanol | 0,9 | 17 |
| Citronellol | 0,8 | 218 |
| Neral | 0,7 | 333 |
| Nerol | 0,7 | 178 |
| Geranial | 0,7 | 389 |
| Geraniol | 0,6 | 145 |

Tabelle 3 zeigt die GC-MS/FID Analyse von Weißem Pfirsich Püree (A) und Orangensaft (B). Bei einem Konzentrationsfaktor von 200 sind 3,4 % Summe aller wertgebenden Aromastoffe zu erwarten. 3,6 % wurden tatsächlich im Konzentrat aus dem weißen Pfirsich gemessen.

Bei Orangensaft wäre bei vollständiger Wiederfindung 1,8 % zu erwarten und tatsächlich wurden 2,2 % bestimmt. Diese Abweichung ist durch die bessere Nachweisbarkeit von Spurenkomponenten im Konzentrat bedingt. Die Analysenwerte, sowie die Sensorik der rückverdünnten Konzentrate zeigen, dass die Kombination von Schleuderkegelkolonnen-Destillation und sorptiver Aufkonzentrierung geeignet ist, das authentisch riechende Destillat in ein Konzentrat ohne Minderung der Geruchsqualität und ohne merkliche Veränderung des Profils der wertgebenden Aromastoffe zu überführen.

Dabei wurde gefunden, dass die Gehalte an Alkoholen, insbesondere Butanol, Isobutanol, 2-Methylbutanol, Isoamylalkohol und 1,3-Pentenol (Tabelle 3) im Konzentrat abgereichert werden ohne sensorisch wahrnehmbar zu sein. So beträgt die Wiederfindung von Isobutanol 3,5 %, Isoamylalkohol 26 % und 1,3-Pentenol 10 % (Tabelle 3 A) und die Wiederfindung von Isobutanol 9 %, 2-Methylbutanol 19 % und Isoamylalkohol im Konzentrat auf dem Orangesaft 31 % (Tabelle 3 B).

Bei der Thermodesorption des Adsorbermaterial mit Wasserdampf und Gewinnung der Ölphase am Beispiel des Apfels, wurde der fruchteigene Ethanol weitestgehend reduziert (Tabelle 4).

**Tabelle 4: Gaschromatographische Analytik einer Apfelwasserphase und deren daraus gewonnen Konzentraten daraus, die mit verschiedenen Adsorbermaterialien sowie Elutionsmitteln gewonnen wurden.**

| Name | Ausgang Apfelwasserphasen Destillat [mg/kg] | Ad-/Desorption mit Polystyrol und Ethanol als Eluent (A) [mg/kg] | Ad-/Desorption mit Polystyrol und Wasserdampf als Eluent (B) [mg/kg] | Ad-/Desorption mit Aktivkohle und Wasserdampf als Eluent (C) [mg/kg] |
|---|---|---|---|---|
| 2-E-Hexenal | 24,63 | 1601,32 | 29807,59 | 4,90 |
| Hexanal | 8,45 | 202,10 | 13430,34 | 2,09 |
| Hexanol | 36,16 | 7104,88 | 234557,04 | 22,71 |
| 2-E-Hexenol | 4,94 | 1736,44 | 40814,51 | 3,58 |
| 2-Methylbutanol | 3,07 | 2465,38 | 36193,31 | 3,19 |
| Butylalkohol | 1,52 | 2595,18 | 10555,63 | 2,32 |
| Isoamylalkohol | 0,52 | 752,96 | 11309,28 | 0,30 |
| Butylacetate | 10,68 | 399,12 | 9585,36 | 2,88 |
| 2-Methylbutylacetat | 7,35 | 217,81 | 6408,29 | 1,05 |
| Hexylacetat | 4,13 | 120,80 | 5081,51 | 0,53 |
| 2-E-Hexenylacetat | 2,88 | 74,37 | 2933,37 | 0,48 |
| Ethylbutyrat | 2,01 | 85,00 | 1751,00 | 0,63 |

Zur Durchführung der lösungsmittelfreien Desorption wurde zuerst eine gängige Aktivkohle (70 g CarboTech CGF4/90), sowie ein spezielles quervernetztes makroporöses Polystyrol (147 g Lewatit^{®} VP OC 1064) mit der Wasserphase zu je 5,5 und 7 kg beladen. Nach der Beladung wurde die Säulenfüllung mit Inertgas (Stickstoff) getrocknet und im Anschluss mit Wasserdampf eluiert (Tabelle 4 B und C) Als Vergleich diente die Elution des Polystyrolmaterials mit Ethanol (Tabelle 4 A). Die Säulen weisen hierbei jeweils einen Innendurchmesser von 3,7 cm und eine Höhe von 25 cm auf. Die Desorption der mit Aktivkohle bzw. dem quervernetzten makroporösen Polystyrol als Adsorbermaterial befüllten Säulen erfolgte jeweils mit Wasserdampf bei 5 mL/min und 2 bar und wurde nach Kondensation des fünffachen Säulenvolumens gestoppt.

Das Eluat der Aktivkohle zeigt eine Beladung von 40 mg/kg und damit keine Aufkonzentrierung im Vergleich zur Ausgangswasserphase. Überraschend wurde gefunden, dass im Vergleich dazu die Aromastoffe vom Polystyrolmaterial quantitativ mit Wasserdampf eluiert werden konnten, was zur Trübung des Eluats, gefolgt von der Bildung einer Ölphase, führte. Die Wiederfindung der Wasserdampf Desorption ist mit der ethanolischen Desorption, mit Ausnahme von Ethanol und den Fuselakoholen, vergleichbar (Tabelle 4). Der Gehalt an Ethanol im Öl betrug < 1%. Durch die Adsorption, sowie Desorption ist also eine weitere Aufkonzentrierung der wertgebenden Aromastoffe und Abreicherung von Ethanol und den Fuselakoholen erfolgt, womit das Verhältnis von Ethanol zur Summe wertgebender Aromastoffe deutlich < 1 ist.

Die Verkostung der Wasserphase mit 0,1%, im Vergleich zum ethanolischen Konzentrat mit 30 mg/kg Dosierung, (Tabelle 4 A) und dem Lösungsmittelfreien Aromaöl mit 10 mg/kg Dosierung (Tabelle 4 B) auf Wasser, zeigte stark ausgeprägte grüne, fruchtig-estrige, apfel-artige Noten, die authentisch und vergleichbar mit der Ausgangswasserphase sind. Damit wurde gezeigt, dass durch die hier beschriebene Kombination an spezieller Destillation und Ad-/Desorption ein stark aufkonzentriertes Aromakonzentrat mit V(E/A) < 1 gewonnen wird, welches bei geringer Dosierung zum Lebensmittel (z.B. < 0,1%) diesem ein intensives dem Ausgangsstoff entsprechendes Aroma verleiht.

Durch die stufenweise Konzentrierung von wertgebenden Aromastoffe und Abreicherung von Gärhauptprodukten durch Kombination von Schleuderkegelkolonnen-Destillation und Ad-/Desorption lässt sich bei der Entalkoholisierung von Bier ein besonders intensives und authentisches Konzentrat gewinnen (Tabelle 5).

**Tabelle 5: Gaschromatographische Analytik eines Destillats und daraus gewonnenem Konzentrat aus Pilsner Bier**

| Name | Pilsner Bier SCC-Destillat [mg/kg] | Bieraromakonzentrat [mg/kg] |
|---|---|---|
| 2-Methylbutanol | 246,10 | 1493,7 |
| Isoamylalkohol | 230,94 | 5464,9 |
| Isobutanol | 103,92 | 263,3 |
| 2-Phenylethylalkohol | 19,18 | 1116,7 |
| Isoamylacetate | 5,83 | 335,6 |
| Octansäure | 5,63 | 283,7 |
| 2-Phenylethylacetat | 2,55 | 189,0 |
| Ethylcapronate | 2,18 | 48,9 |
| Butanol | 1,57 | 3,4 |
| Ethylcaprylat | 0,33 | 20,3 |
| Isobutylacetat | 0,03 | 20,0 |

Das Schleuderkegelkolonnen-Destillat mit einem Ethanolgehalt von 45 Vol.-% aus einem Bier Pilsner Typ mit 5 Vol.-% wurde 250-fach aufkonzentriert. Die Adsorption erfolgte mit einer 300L fassenden Edelstahlsäule gefüllt mit Polystyrolmaterial und wurde mit 100 kg Bieralkohol desorbiert. Die Rearomatisierung der entalkoholisierten Base erfolgte mit 0,3 g/L des Konzentrats und gab dieser seine typisch blumig, terpenig, malzigen Noten zurück ohne dabei den Restalkoholgehalt von 0,05 Vol.-% zu überschreiten. Das V(E/A) Verhältnis verbesserte sich von 2500 für das eingesetzte Bier mit 5 Vol.-% auf 690 bei dem Destillat mit 45 Vol.-% und auf 94 für das Bierkonzentrat nach Elution mit Bieralkohol bzw. <1 für die Desorption mit Wasserdampf.

**Tabelle 6: Gaschromatographische Analytik eines Destillats und daraus gewonnenem Konzentrat aus Wein**

| Name | Wein SCC-Destillat [mg/kg] | Weinaromakonzentrat [mg/kg] |
|---|---|---|
| Isoamylalkohol | 1278,89 | 1742,3 |
| Isobutanol | 162,25 | 30,5 |
| Ethylcapronate | 118,46 | 3620,6 |
| Isoamylacetat | 109,26 | 7335,6 |
| Ethylcaprylat | 85,30 | 3415,1 |
| Ethylbutyrat | 57,42 | 427,5 |
| Ethylcaprinat | 35,94 | 1449,7 |
| Hexanol | 23,05 | 230,8 |
| Hexylacetat | 19,86 | 891,3 |
| Butanol | 5,17 | 2,3 |
| 2-Phenylethylalkohol | 2,79 | 20,9 |
| 3-Z-Hexenol | 1,47 | 3,1 |
| Linalool | 1,39 | 24,2 |

Das Destillat nach Tabelle 6 enthält 60 Alk.-Vol.-% und wird für die Adsorption im Verhältnis 1/10 mit Wasser verdünnt. Durch Adsorption von 8000 kg verdünntem Rotwein mit einer 20 L Säule gefüllt mit dem Polystyrol-Adsorbermaterial und Desorption mit 16 kg einer stark alkoholischen Weinfraktion wird ein Weinaromakonzentrat erhalten, welches bei einer Dosierung von 0,035 % zum entalkoholisierten Wein diesem seine typisch rot-fruchtigen, blumigen und würzigen Charakter zurückgibt. Mit einem Alkoholgehalt von 0,015 Vol.-% des entalkoholisierten Weins ergibt sich in Summe nach Rearomatisierung ein Alkoholgehalt von 0,05 Vol.-%, bei dem eine "0,0 Vol.-%" Auslobung erfolgen kann.

## Patentansprüche

1. Verfahren zur Gewinnung einer flüchtigen Fraktion aus einem Saft und/oder einem Alkohol enthaltenden Getränk und/oder einem Püree, wobei der Saft bzw. das Alkohol enthaltende Getränk bzw. das Püree Ethanol enthält, aufweisend oder bestehend aus folgenden Schritten:
(a) Destillation eines Stoffgemischs aus dem Saft und/oder dem Alkohol enthaltenden Getränk und/oder dem Püree, wobei die Destillation durch eine Schleuderkegelkolonne erfolgt;
(b) in Kontakt Bringen des Stoffgemischs aus Schritt (a) mit einem Sorbens zum Erhalten eines beladenen Sorbens; und
(c) in Kontakt Bringen des beladenen Sorbens aus Schritt (b) mit einem liquiden Desorbens zum Erhalten der flüchtigen Fraktion, **dadurch gekennzeichnet, dass** gewünschte Inhaltsstoffe der flüchtigen Fraktion derart aufkonzentriert im Vergleich zu dem in Schritt (a) eingesetzten Saft und/oder dem Alkohol enthaltenden Getränk und/oder dem Püree sind,
dass das Verhältnis des in der flüchtigen Fraktion enthaltenen Ethanols zu der Summe an Aromastoffen V(E/A) 0,005 bis 1000, vorzugsweise 0,1 bis 20 beträgt,
und,
dass ein Zusatz von 0,001 bis 0,1 Massen-% der flüchtigen Fraktion zu einer beliebigen Lebensmittelzubereitung einen wahrnehmbaren Geruchseindruck und/oder Geschmackseindruck bei einer Testperson erzeugt.

2. Verfahren nach Anspruch 1, wobei die Schleuderkegelkolonnen- Destillation in Form einer Gegenstrom Destillation bei einem Druck von 1 bis 500 mbar durchgeführt wird.

3. Verfahren nach Anspruch 2, wobei die Gegenstrom Destillation mit einem Gas durchgeführt wird, wobei das Gas ein Inertgas, vorzugsweise Stickstoff, ist.

4. Verfahren nach einem der Ansprüche 1 bis 3, wobei ein Stripverhältnis im Bereich von 1 : 1 bis 10 : 1 verwendet wird.

5. Verfahren nach einem der vorstehenden Ansprüche, wobei die wässrige Lösung eine Temperatur im Bereich von 28 bis 70°C, vorzugsweise im Bereich von 30 bis 60°C, mehr bevorzugt im Bereich von 32 bis 50°C, aufweist.

6. Verfahren nach einem der vorstehenden Ansprüche, wobei das liquide Desorbens ein alkoholfreies Lösungsmittel ist, vorzugsweise Wasser oder Wasserdampf.

7. Verfahren nach einem der vorstehenden Ansprüche, wobei das Sorbens ein mit organischen Resten oberflächenmodifizierter poröser Feststoff, vorzugsweise ein Polystyrol, ist.

8. Verfahren nach einem der vorstehenden Ansprüche, wobei die Lebensmittelzubereitung der Saft und/oder das alkoholische Getränk und/oder das Püree ist.

9. Verfahren nach einem der vorstehenden Ansprüche, wobei der Saft ein Saft ausgewählt aus der Gruppe bestehend aus Fruchtsaft, Beerensaft und Gemüsesaft ist, und/oder das alkoholische Getränk ausgewählt aus der Gruppe bestehend aus Wein, Fruchtwein, weinhaltigen Getränken, Bier und bierhaltigen Getränken ist, vorzugsweise wobei die Frucht und/oder die Beere des Safts ausgewählt ist aus der Gruppe bestehend aus Zitrusfrucht (Citrus aurantium), insbesondere Zitrone, Orange, Apfelsine, Mandarine, Clementine, Grapefruit, Pampelmuse, Limone, Limette, Kumquat, Tangor und Tangelo, Melone, Kiwi, Papaya, Avocado, Acerola, Bärentraube, Brombeere, Blaubeere, Boysenbeere, Kirsche, virginische Traubenkirsche, Moltebeere, rote und schwarze Johannisbeere, Dattel, Kratzbeere (Rubus caesius), Holunderbeere, Traube, Stachelbeere, Huckleberry, Loganbeere, Olallieberry, Maulbeere, Rosine, Plains Berry, Prairie Berry, Preiselbeere, Himbeere, Birne, Pracht-Himbeere (Rubus spectabilis), Sanddornfrucht, Schlehenfrucht, Erdbeere, Weiße Zimt-Himbeere (Rubus parviflorus), Bocksdornfrucht, Weinbeere, Heidelbeere, Apfel, Rhabarber, Passionsfrucht, Pflaume, bspw. Zwetschge, Mirabelle, Aprikose, Nektarine, Quitte, Kiwi, Sternfrucht, Litschie, Ananas, Guave, Papaya, Maracuja und Mango und Pfirsich, vorzugsweise wobei das Gemüse des Safts ausgewählt ist aus der Gruppe bestehend aus Möhre, Tomate, Gurke, Rettich, Rote Rübe, Sauerkraut, Sellerie und Spinat.

10. Verfahren nach einem der vorstehenden Ansprüche, wobei die flüchtige Fraktion einen oder mehrere Aroma-, Geschmacks- und/oder Duftstoffe, vorzugsweise alle, der alkoholhaltigen Lebensmittelzubereitung aufweist.

11. Verfahren nach einem der vorstehenden Ansprüche, wobei das Püree ein Püree ausgewählt aus der Gruppe bestehend aus Püree aus Williams Birne, Püree aus weißem Pfirsich und Apfelpüree ist.

12. Flüchtige Fraktion erhältlich oder erhalten durch ein Verfahren nach einem der vorstehenden Ansprüche.

13. Verwendung einer flüchtigen Fraktion nach Anspruch 12 in einem zum Verzehr geeigneten Produkt oder zur Herstellung eines zum Verzehr geeigneten Produkts, vorzugsweise einem Nahrungsmittel, Genussmittel, Getränk, einer Halbfertigware, einem Mundhygiene-, einem kosmetischen oder einem pharmazeutischen Produkt.

14. Zum Verzehr geeignetes Produkt, vorzugsweise Nahrungsmittel, Genussmittel, Getränk, Halbfertigware, Mundhygiene-, kosmetisches oder pharmazeutisches Produkt, umfassend eine Menge einer flüchtigen Fraktion nach Anspruch 12, wobei vorzugsweise der Gesamtanteil der flüchtigen Fraktion und/oder der darin enthaltenen Geschmacks- und/oder Duftstoffe bezogen auf das Gesamtgewicht des zum Verzehr geeigneten Produkts im Bereich von 0,001 bis 5 Massen-%, bevorzugt im Bereich von 0,01 bis 1 Massen-%, besonders bevorzugt im Bereich von 0,1 bis 0,5 Massen-% liegt.
